(19) **Europäisches Patentamt / European Patent Office / Office européen des brevets**

(11) **EP 4 369 715 A1**

(12) # EUROPEAN PATENT APPLICATION
published in accordance with Art. 153(4) EPC

(43) Date of publication:
**15.05.2024 Bulletin 2024/20**

(21) Application number: **22837977.2**

(22) Date of filing: **06.07.2022**

(51) International Patent Classification (IPC):
**H04N 19/61** (2014.01)  **H04N 19/18** (2014.01)
**H04N 19/176** (2014.01)  **H04N 19/122** (2014.01)
**H04N 19/132** (2014.01)  **H04N 19/124** (2014.01)
**H04N 19/11** (2014.01)  **H04N 19/593** (2014.01)

(52) Cooperative Patent Classification (CPC):
**H04N 19/11; H04N 19/122; H04N 19/124;
H04N 19/132; H04N 19/176; H04N 19/18;
H04N 19/593; H04N 19/61**

(86) International application number:
**PCT/KR2022/009768**

(87) International publication number:
**WO 2023/282625 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **06.07.2021  US 202163218508 P
04.08.2021  US 202163229473 P**

(71) Applicant: **LG Electronics Inc.
Yeongdeungpo-gu
Seoul 07336 (KR)**

(72) Inventors:
• **CHOI, Jungah
  Seoul 06772 (KR)**
• **ZHAO, Jie
  Seoul 06772 (KR)**
• **KOO, Moonmo
  Seoul 06772 (KR)**
• **LIM, Jaehyun
  Seoul 06772 (KR)**
• **CHOI, Jangwon
  Seoul 06772 (KR)**
• **KIM, Seung Hwan
  Seoul 06772 (KR)**

(74) Representative: **Frenkel, Matthias Alexander
Wuesthoff & Wuesthoff
Patentanwälte und Rechtsanwalt PartG mbB
Schweigerstraße 2
81541 München (DE)**

(54) **NON-SEPARABLE PRIMARY TRANSFORM-BASED IMAGE ENCODING/DECODING METHOD AND DEVICE, AND RECORDING MEDIUM FOR STORING BITSTREAM**

(57)    An image encoding/decoding method and apparatus are provided. An image decoding method comprises generating a residual block of a current block by performing inverse transform on the current block based on a predetermined non-separable primary transform matrix and reconstructing the current block based on the residual block. The non-separable primary transform matrix may be applied to all transform coefficients of the current block regardless of a size of the current block.p

FIG. 26

**Description**

**Technical Field**

The present disclosure relates to an image encoding/decoding method and apparatus and a recording medium for storing a bitstream, and, more particularly, to an image encoding/decoding method and apparatus based on non-separable primary transform and a recording medium for storing a bitstream generated by the image encoding method/apparatus of the present disclosure.

**Background Art**

Recently, demand for high-resolution and high-quality images such as high definition (HD) images and ultra high definition (UHD) images is increasing in various fields. As resolution and quality of image data are improved, the amount of transmitted information or bits relatively increases as compared to existing image data. An increase in the amount of transmitted information or bits causes an increase in transmission cost and storage cost.

Accordingly, there is a need for high-efficient image compression technology for effectively transmitting, storing and reproducing information on high-resolution and high-quality images.

**Disclosure**

**Technical Problem**

An object of the present disclosure is to provide an image encoding/decoding method and apparatus with improved encoding/decoding efficiency.

An object of the present disclosure is to provide an image encoding/decoding method and apparatus for performing non-separable primary transform.

An object of the present disclosure is to provide an image encoding/decoding method and apparatus for performing non-separable primary transform based on a MTS scheme.

An object of the present disclosure is to provide an image encoding/decoding method and apparatus for performing non-separable primary transform based on a subblock.

An object of the present disclosure is to provide an image encoding/decoding method and apparatus for performing non-separable primary transform based on symmetry between blocks.

Another object of the present disclosure is to provide a non-transitory computer-readable recording medium storing a bitstream generated by an image encoding method or apparatus according to the present disclosure.

Another object of the present disclosure is to provide a recording medium storing a bitstream received, decoded and used to reconstruct an image by an image decoding apparatus according to the present disclosure.

Another object of the present disclosure is to provide method of transmitting a bitstream generated by an image encoding method or apparatus according to the present disclosure.

The technical problems solved by the present disclosure are not limited to the above technical problems and other technical problems which are not described herein will become apparent to those skilled in the art from the following description.

**Technical Solution**

An image decoding method according to an aspect of the present disclosure may comprise generating a residual block of a current block by performing inverse transform on the current block based on a predetermined non-separable primary transform matrix and reconstructing the current block based on the residual block. The non-separable primary transform matrix may be applied to all transform coefficients of the current block regardless of a size of the current block.

An image decoding g apparatus according to another aspect of the present disclosure may comprise a memory and at least one processor. The at least one processor may generate a residual block of a current block by performing inverse transform on the current block based on a predetermined non-separable primary transform matrix and reconstruct the current block based on the residual block. The non-separable primary transform matrix may be applied to all transform coefficients of the current block regardless of a size of the current block.

An image encoding method according to another aspect of the present disclosure may generating a transform coefficient block of a current block by performing transform on the current block based on a predetermined non-separable primary transform matrix and encoding the current block based on the transform coefficient block. The non-separable primary transform matrix may be applied to all residual samples of the current block regardless of a size of the current block.

In addition, a computer-readable recording medium according to another aspect of the present disclosure may store the bitstream generated by the image encoding apparatus or the image encoding method of the present disclosure.

In a transmission method according to another aspect of the present disclosure, a bitstream generated by an image encoding apparatus or an image encoding method of the present disclosure may be transmitted.

The features briefly summarized above with respect to the present disclosure are merely exemplary aspects of the detailed description below of the present disclosure, and do not limit the scope of the present disclosure.

**Advantageous Effects**

According to the present disclosure, it is possible to provide an image encoding/decoding method and apparatus with improved encoding/decoding efficiency.

According to the present disclosure, it is possible to provide an image encoding/decoding method and apparatus for performing non-separable primary transform.

According to the present disclosure, it is possible to provide an image encoding/decoding method and apparatus for performing non-separable primary transform based on a MTS scheme.

According to the present disclosure, it is possible to provide an image encoding/decoding method and apparatus for performing non-separable primary transform based on a subblock.

According to the present disclosure, it is possible to provide an image encoding/decoding method and apparatus for performing non-separable primary transform based on symmetry between blocks.

Also, according to the present disclosure, it is possible to provide a non-transitory computer-readable recording medium storing a bitstream generated by an image encoding method or apparatus according to the present disclosure.

Also, according to the present disclosure, it is possible to provide a non-transitory computer-readable recording medium storing a bitstream received, decoded and used to reconstruct an image by an image decoding apparatus according to the present disclosure.

Also, according to the present disclosure, it is possible to provide a method of transmitting a bitstream generated by an image encoding method or apparatus according to the present disclosure.

It will be appreciated by persons skilled in the art that that the effects that can be achieved through the present disclosure are not limited to what has been particularly described hereinabove and other advantages of the present disclosure will be more clearly understood from the detailed description.

**Description of Drawings**

FIG. 1 is a view schematically illustrating a video coding system, to which an embodiment of the present disclosure is applicable.

FIG. 2 is a view schematically illustrating an image encoding apparatus, to which an embodiment of the present disclosure is applicable.

FIG. 3 is a view schematically illustrating an image decoding apparatus, to which an embodiment of the present disclosure is applicable.

FIG. 4 is a view illustrating an LFNST application method.

FIG. 5 is a flowchart illustrating an encoding process in which AMT is performed.

FIG. 6 is a flowchart illustrating a decoding process in which AMT is performed.

FIG. 7 is a flowchart illustrating an encoding process in which NSST is performed.

FIG. 8 is a flowchart illustrating a decoding process in which NSST is performed.

FIGS. 9 and 10 are views illustrating a method of performing NSST.

FIGS. 11 and 12 are views illustrating a method of performing RST.

FIG. 13 is a view illustrating a transform and inverse transform process according to an embodiment of the present disclosure.

FIGS. 14a and 14b are views illustrating a non-separable secondary transform process.

FIGS. 15a to 15d are views illustrating a non-separable primary transform process according to an embodiment of the present disclosure.

FIGS. 16a to 16d are views illustrating a non-separable primary transform process according to another embodiment of the present disclosure.

FIG. 17 is a flowchart illustrating a transform method according to an embodiment of the present disclosure.

FIG. 18 is a flowchart illustrating an inverse transform method according to an embodiment of the present disclosure.

FIG. 19 is a flowchart illustrating a subblock non-separable primary transform/inverse transform according to an embodiment of the present disclosure.

FIGS. 20a and 20b are views illustrating a subblock based non-separable primary transform process.

FIGS. 21 to 24 are views illustrating a non-separable primary transform set determination method according to an embodiment of the present disclosure.

FIG. 25 is a flowchart illustrating an image encoding method according to an embodiment of the present disclosure.

FIG. 26 is a flowchart illustrating an image decoding method according to an embodiment of the present disclosure.

FIG. 27 is a view illustrating a content streaming system, to which an embodiment of the present disclosure is applicable.


**Mode for Invention**

Hereinafter, the embodiments of the present disclosure will be described in detail with reference to the accompanying drawings so as to be easily implemented by those skilled in the art. However, the present disclosure may be implemented in various different forms, and is not limited to the embodiments described herein.

In describing the present disclosure, if it is determined that the detailed description of a related known function or construction renders the scope of the present disclosure unnecessarily ambiguous, the detailed description thereof will be omitted. In the drawings, parts not related to the description of the present disclosure are omitted, and similar reference numerals are attached to similar parts.

In the present disclosure, when a component is "connected", "coupled" or "linked" to another component, it may include not only a direct connection relationship but also an indirect connection relationship in which an intervening component is present. In addition, when a component "includes" or "has" other components, it means that other components may be further included, rather than excluding other components unless otherwise stated.

In the present disclosure, the terms first, second, etc. may be used only for the purpose of distinguishing one component from other components, and do not limit the order or importance of the components unless otherwise stated. Accordingly, within the scope of the present disclosure, a first component in one embodiment may be referred to as a second component in another embodiment, and similarly, a second component in one embodiment may be referred to as a first component in another embodiment.

In the present disclosure, components that are distinguished from each other are intended to clearly describe each feature, and do not mean that the components are necessarily separated. That is, a plurality of components may be integrated and implemented in one hardware or software unit, or one component may be distributed and implemented in a plurality of hardware or software units. Therefore, even if not stated otherwise, such embodiments in which the components are integrated or the component is distributed are also included in the scope of the present disclosure.

In the present disclosure, the components described in various embodiments do not necessarily mean essential components, and some components may be optional components. Accordingly, an embodiment consisting of a subset of components described in an embodiment is also included in the scope of the present disclosure. In addition, embodiments including other components in addition to components described in the various embodiments are included in the scope of the present disclosure.

The present disclosure relates to encoding and decoding of an image, and terms used in the present disclosure may have a general meaning commonly used in the technical field, to which the present disclosure belongs, unless newly defined in the present disclosure.

In the present disclosure, a "video" may mean a set of images over time.

In the present disclosure, a "picture" generally refers to a unit representing one image in a specific time period, and a slice/tile is a coding unit constituting a part of a picture, and one picture may be composed of one or more slices/tiles. In addition, a slice/tile may include one or more coding tree units (CTUs).

In the present disclosure, a "pixel" or a "pel" may mean a smallest unit constituting one picture (or image). In addition, "sample" may be used as a term corresponding to a pixel. A sample may generally represent a pixel or a value of a pixel, and may represent only a pixel/pixel value of a luma component or only a pixel/pixel value of a chroma component.

In the present disclosure, a "unit" may represent a basic unit of image processing. The unit may include at least one of a specific region of the picture and information related to the region. The unit may be used interchangeably with terms such as "sample array", "block" or "area" in some cases. In a general case, an $M \times N$ block may include samples (or sample arrays) or a set (or array) of transform coefficients of M columns and N rows.

In the present disclosure, "current block" may mean one of "current coding block", "current coding unit", "coding target block", "decoding target block" or "processing target block". When prediction is performed, "current block" may mean "current prediction block" or "prediction target block". When transform (inverse transform)/quantization (dequantization) is performed, "current block" may mean "current transform block" or "transform target block". When filtering is performed, "current block" may mean "filtering target block".

In addition, in the present disclosure, a "current block" may mean a block including both a luma component block and a chroma component block or "a luma block of a current block" unless explicitly stated as a chroma block. The luma component block of the current block may be expressed by including an explicit description of a luma component block such as "luma block" or "current luma block. In addition, the "chroma component block of the current block" may be expressed by including an explicit description of a chroma component block, such as "chroma block" or "current chroma block".

In the present disclosure, the term "/" and "," should be interpreted to indicate "and/or." For instance, the expression "A/B" and "A, B" may mean "A and/or B." Further, "A/B/C" and "A/B/C" may mean "at least one of A, B, and/or C."

In the present disclosure, the term "or" should be interpreted to indicate "and/or." For instance, the expression "A or B" may comprise 1) only "A", 2) only "B", and/or 3) both "A and B". In other words, in the present disclosure, the term "or" should be interpreted to indicate "additionally or alternatively."

In the present disclosure, "at least one of A, B, and C" may mean "only A," "only B," "only C," or "any and all combinations of A, B, and C." In addition, "at least one A, B or C" or "at least one A, B and/or C" may mean "at least one A, B and C."

Parentheses used in the present disclosure may mean "for example." For example, if "prediction (intra prediction)" is indicated, "intra prediction" may be proposed as an example of "prediction." In other words, "prediction" in the present disclosure is not limited to "intra prediction," and "intra prediction" may be proposed as an example of "prediction." In addition, even when "prediction (i.e., intra prediction)" is indicated, "intra prediction" may be proposed as an example of "prediction."

## Overview of video coding system

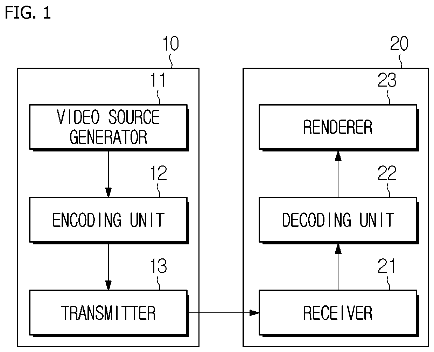

FIG. 1 is a view illustrating a video coding system, to which an embodiment of the present disclosure is applicable.

The video coding system according to an embodiment may include a encoding apparatus 10 and a decoding apparatus 20. The encoding apparatus 10 may deliver encoded video and/or image information or data to the decoding apparatus 20 in the form of a file or streaming via a digital storage medium or network.

The encoding apparatus 10 according to an embodiment may include a video source generator 11, an encoding unit 12 and a transmitter 13. The decoding apparatus 20 according to an embodiment may include a receiver 21, a decoding unit 22 and a renderer 23. The encoding unit 12 may be called a video/image encoding unit, and the decoding unit 22 may be called a video/image decoding unit. The transmitter 13 may be included in the encoding unit 12. The receiver 21 may be included in the decoding unit 22. The renderer 23 may include a display and the display may be configured as a separate device or an external component.

The video source generator 11 may acquire a video/image through a process of capturing, synthesizing or generating the video/image. The video source generator 11 may include a video/image capture device and/or a video/image generating device. The video/image capture device may include, for example, one or more cameras, video/image archives including previously captured video/images, and the like. The video/image generating device may include, for example, computers, tablets and smartphones, and may (electronically) generate video/images. For example, a virtual video/image may be generated through a computer or the like. In this case, the video/image capturing process may be replaced by a process of generating related data.

The encoding unit 12 may encode an input video/image. The encoding unit 12 may perform a series of procedures such as prediction, transform, and quantization for compression and coding efficiency. The encoding unit 12 may output encoded data (encoded video/image information) in the form of a bitstream.

The transmitter 13 may transmit the encoded video/image information or data output in the form of a bitstream to the receiver 21 of the decoding apparatus 20 through a digital storage medium or a network in the form of a file or streaming. The digital storage medium may include various storage mediums such as USB, SD, CD, DVD, Blu-ray, HDD, SSD, and the like. The transmitter 13 may include an element for generating a media file through a predetermined file format and may include an element for transmission through a broadcast/communication network. The receiver 21 may extract/receive the bitstream from the storage medium or network and transmit the bitstream to the decoding unit 22.

The decoding unit 22 may decode the video/image by performing a series of procedures such as dequantization, inverse transform, and prediction corresponding to the operation of the encoding unit 12.

The renderer 23 may render the decoded video/image. The rendered video/image may be displayed through the display.

## Overview of image encoding apparatus

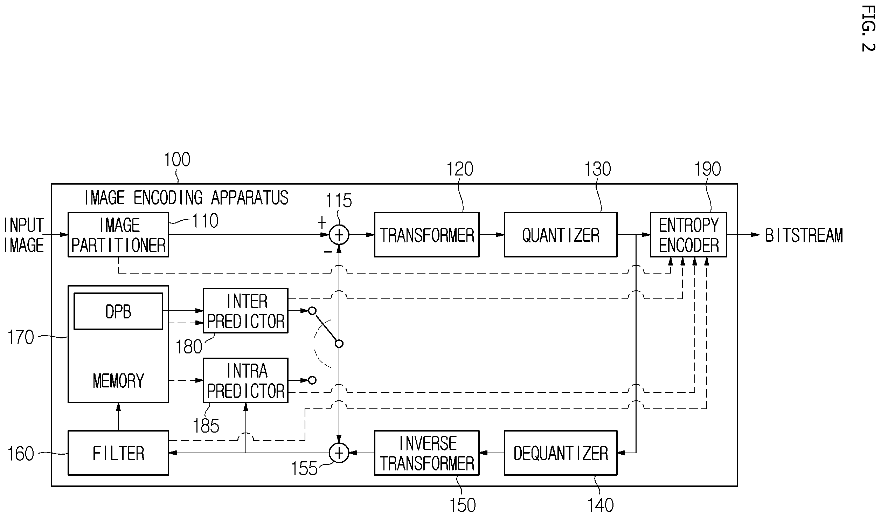

FIG. 2 is a view schematically illustrating an image encoding apparatus, to which an embodiment of the present disclosure is applicable.

As shown in FIG. 2, the image encoding apparatus 100 may include an image partitioner 110, a subtractor 115, a transformer 120, a quantizer 130, a dequantizer 140, an inverse transformer 150, an adder 155, a filter 160, a memory 170, an inter prediction unit 180, an intra prediction unit 185 and an entropy encoder 190. The inter prediction unit 180 and the intra prediction unit 185 may be collectively referred to as a "predictor". The transformer 120, the quantizer 130, the dequantizer 140 and the inverse transformer 150 may be included in a residual processor. The residual processor may further include the subtractor 115.

All or at least some of the plurality of components configuring the image encoding apparatus 100 may be configured by one hardware component (e.g., an encoder or a processor) in some embodiments. In addition, the memory 170 may include a decoded picture buffer (DPB) and may be configured by a digital storage medium.

The image partitioner 110 may partition an input image (or a picture or a frame) input to the image encoding apparatus 100 into one or more processing units. For example, the processing unit may be called a coding unit (CU). The coding unit may be acquired by recursively partitioning a coding tree unit (CTU) or a largest coding unit (LCU) according to a quad-tree binary-tree ternary-tree (QTBT/TT) structure. For example, one coding unit may be partitioned into a plurality of coding units of a deeper depth based on a quad tree structure, a binary tree structure, and/or a ternary structure. For partitioning of the coding unit, a quad tree structure may be applied first and the binary tree structure and/or ternary structure may be applied later. The coding procedure according to the present disclosure may be performed based on the final coding unit that is no longer partitioned. The largest coding unit may be used as the final coding unit or the coding unit of deeper depth acquired by partitioning the largest coding unit may be used as the final coding unit. Here, the coding procedure may include a procedure of prediction, transform, and reconstruction, which will be described later. As another example, the processing unit of the coding procedure may be a prediction unit (PU) or a transform unit (TU). The prediction unit and the transform unit may be split or partitioned from the final coding unit. The prediction unit may be a unit of sample prediction, and the transform unit may be a unit for deriving a transform coefficient and/or a unit for deriving a residual signal from the transform coefficient.

The prediction unit (the inter prediction unit 180 or the intra prediction unit 185) may perform prediction on a block to be processed (current block) and generate a predicted block including prediction samples for the current block. The prediction unit may determine whether intra prediction or inter prediction is applied on a current block or CU basis. The prediction unit may generate various information related to prediction of the current block and transmit the generated information to the entropy encoder 190. The information on the prediction may be encoded in the entropy encoder 190 and output in the form of a bitstream.

The intra prediction unit 185 may predict the current block by referring to the samples in the current picture. The referred samples may be located in the neighborhood of the current block or may be located apart according to the intra prediction mode and/or the intra prediction technique. The intra prediction modes may include a plurality of non-directional modes and a plurality of directional modes. The non-directional mode may include, for example, a DC mode and a planar mode. The directional mode may include, for example, 33 directional prediction modes or 65 directional prediction modes according to the degree of detail of the prediction direction. However, this is merely an example, more or less directional prediction modes may be used depending on a setting. The intra prediction unit 185 may determine the prediction mode applied to the current block by using a prediction mode applied to a neighboring block.

The inter prediction unit 180 may derive a predicted block for the current block based on a reference block (reference sample array) specified by a motion vector on a reference picture. In this case, in order to reduce the amount of motion information transmitted in the inter prediction mode, the motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. The reference picture including the reference block and the reference picture including the temporal neighboring block may be the same or different. The temporal neighboring block may be called a collocated reference block, a co-located CU (colCU), and the like. The reference picture including the temporal neighboring block may be called a collocated picture (colPic). For example, the inter prediction unit 180 may configure a motion information candidate list based on neighboring blocks and generate information indicating which candidate is used to derive a motion vector and/or a reference picture index of the current block. Inter prediction may be performed based on various prediction modes. For example, in the case of a skip mode and a merge mode, the inter prediction unit 180 may use motion information of the neighboring block as motion information of the current block. In the case of the skip mode, unlike the merge mode, the residual signal may not be transmitted. In the case of the motion vector prediction (MVP) mode, the motion vector of the neighboring block may be used as a motion vector predictor, and the motion vector of the current block may be signaled by encoding a motion vector difference and an indicator for a motion vector predictor. The motion vector difference may mean a difference between the motion vector of the current block and the motion vector predictor.

The prediction unit may generate a prediction signal based on various prediction methods and prediction techniques described below. For example, the prediction unit may not only apply intra prediction or inter prediction but also simultaneously apply both intra prediction and inter prediction, in order to predict the current block. A prediction method of simultaneously applying both intra prediction and inter prediction for prediction of the current block may be called combined inter and intra prediction (CIIP). In addition, the prediction unit may perform intra block copy (IBC) for prediction of the current block. Intra block copy may be used for content image/video coding of a game or the like, for example, screen content coding (SCC). IBC is a method of predicting a current picture using a previously reconstructed reference block in the current picture at a location apart from the current block by a predetermined distance. When IBC is applied, the location of the reference block in the current picture may be encoded as a vector (block vector) corresponding to the predetermined distance. IBC basically performs prediction in the current picture, but may be performed similarly to inter prediction in that a reference block is derived within the current picture. That is, IBC may use at least one of the inter prediction techniques described in the present disclosure.

The prediction signal generated by the prediction unit may be used to generate a reconstructed signal or to generate a residual signal. The subtractor 115 may generate a residual signal (residual block or residual sample array) by subtracting the prediction signal (predicted block or prediction sample array) output from the prediction unit from the input image signal (original block or original sample array). The generated residual signal may be transmitted to the transformer 120.

The transformer 120 may generate transform coefficients by applying a transform technique to the residual signal. For example, the transform technique may include at least one of a discrete cosine transform (DCT), a discrete sine transform (DST), a karhunen-loève transform (KLT), a graph-based transform (GBT), or a conditionally non-linear transform (CNT). Here, the GBT means transform obtained from a graph when relationship information between pixels is represented by the graph. The CNT refers to transform acquired based on a prediction signal generated using all previously reconstructed pixels. In addition, the transform process may be applied to square pixel blocks having the same size or may be applied to blocks having a variable size rather than square.

The quantizer 130 may quantize the transform coefficients and transmit them to the entropy encoder 190. The entropy encoder 190 may encode the quantized signal (information on the quantized transform coefficients) and output a bitstream. The information on the quantized transform coefficients may be referred to as residual information. The quantizer 130 may rearrange quantized transform coefficients in a block type into a one-dimensional vector form based on a coefficient scanning order and generate information on the quantized transform coefficients based on the quantized transform coefficients in the one-dimensional vector form.

The entropy encoder 190 may perform various encoding methods such as, for example, exponential Golomb, context-adaptive variable length coding (CAVLC), context-adaptive binary arithmetic coding (CABAC), and the like. The entropy encoder 190 may encode information necessary for video/image reconstruction other than quantized transform coefficients (e.g., values of syntax elements, etc.) together or separately. Encoded information (e.g., encoded video/image information) may be transmitted or stored in units of network abstraction layers (NALs) in the form of a bitstream. The video/image information may further include information on various parameter sets such as an adaptation parameter set (APS), a picture parameter set (PPS), a sequence parameter set (SPS), or a video parameter set (VPS). In addition, the video/image information may further include general constraint information. The signaled information, transmitted information and/or syntax elements described in the present disclosure may be encoded through the above-described encoding procedure and included in the bitstream.

The bitstream may be transmitted over a network or may be stored in a digital storage medium. The network may include a broadcasting network and/or a communication network, and the digital storage medium may include various storage media such as USB, SD, CD, DVD, Blu-ray, HDD, SSD, and the like. A transmitter (not shown) transmitting a signal output from the entropy encoder 190 and/or a storage unit (not shown) storing the signal may be included as internal/external element of the image encoding apparatus 100. Alternatively, the transmitter may be provided as the component of the entropy encoder 190.

The quantized transform coefficients output from the quantizer 130 may be used to generate a residual signal. For example, the residual signal (residual block or residual samples) may be reconstructed by applying dequantization and inverse transform to the quantized transform coefficients through the dequantizer 140 and the inverse transformer 150.

The adder 155 adds the reconstructed residual signal to the prediction signal output from the inter prediction unit 180 or the intra prediction unit 185 to generate a reconstructed signal (reconstructed picture, reconstructed block, reconstructed sample array). If there is no residual for the block to be processed, such as a case where the skip mode is applied, the predicted block may be used as the reconstructed block. The adder 155 may be called a reconstructor or a reconstructed block generator. The generated reconstructed signal may be used for intra prediction of a next block to be processed in the current picture and may be used for inter prediction of a next picture through filtering as described below.

Meanwhile, as described below, luma mapping with chroma scaling (LMCS) is applicable in a picture encoding and/or reconstruction process.

The filter 160 may improve subjective/objective image quality by applying filtering to the reconstructed signal. For example, the filter 160 may generate a modified reconstructed picture by applying various filtering methods to the reconstructed picture and store the modified reconstructed picture in the memory 170, specifically, a DPB of the memory 170. The various filtering methods may include, for example, deblocking filtering, a sample adaptive offset, an adaptive loop filter, a bilateral filter, and the like. The filter 160 may generate various information related to filtering and transmit the generated information to the entropy encoder 190 as described later in the description of each filtering method. The information related to filtering may be encoded by the entropy encoder 190 and output in the form of a bitstream.

The modified reconstructed picture transmitted to the memory 170 may be used as the reference picture in the inter prediction unit 180. When inter prediction is applied through the image encoding apparatus 100, prediction mismatch between the image encoding apparatus 100 and the image decoding apparatus may be avoided and encoding efficiency may be improved.

The DPB of the memory 170 may store the modified reconstructed picture for use as a reference picture in the inter prediction unit 180. The memory 170 may store the motion information of the block from which the motion information in the current picture is derived (or encoded) and/or the motion information of the blocks in the picture that have already been reconstructed. The stored motion information may be transmitted to the inter prediction unit 180 and used as the motion information of the spatial neighboring block or the motion information of the temporal neighboring block. The memory 170 may store reconstructed samples of reconstructed blocks in the current picture and may transfer the reconstructed samples to the intra prediction unit 185.

**Overview of image decoding apparatus**

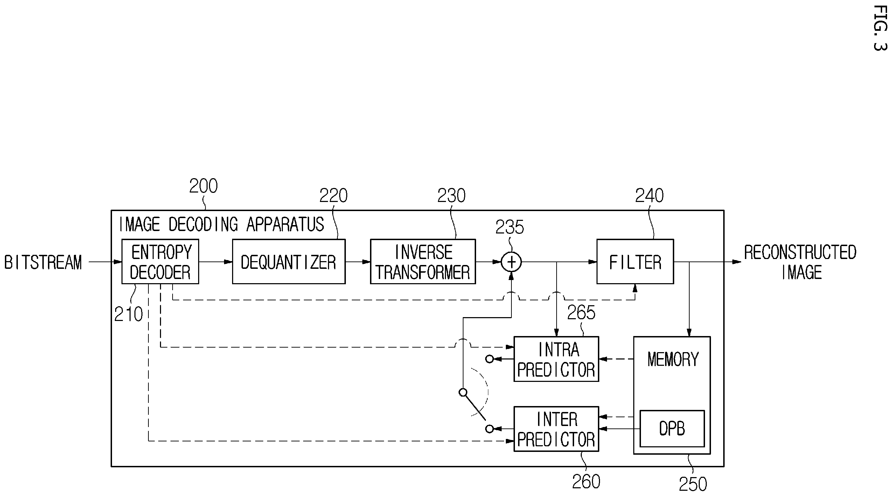

FIG. 3 is a view schematically illustrating an image decoding apparatus, to which an embodiment of the present disclosure is applicable.

As shown in FIG. 3, the image decoding apparatus 200 may include an entropy decoder 210, a dequantizer 220, an inverse transformer 230, an adder 235, a filter 240, a memory 250, an inter prediction unit 260 and an intra prediction unit 265. The inter prediction unit 260 and the intra prediction unit 265 may be collectively referred to as a "predictor". The dequantizer 220 and the inverse transformer 230 may be included in a residual processor.

All or at least some of a plurality of components configuring the image decoding apparatus 200 may be configured by a hardware component (e.g., a decoder or a processor) according to an embodiment. In addition, the memory 250 may include a decoded picture buffer (DPB) or may be configured by a digital storage medium.

The image decoding apparatus 200, which has received a bitstream including video/image information, may reconstruct an image by performing a process corresponding to a process performed by the image encoding apparatus 100 of FIG. 2. For example, the image decoding apparatus 200 may perform decoding using a processing unit applied in the image encoding apparatus. Thus, the processing unit of decoding may be a coding unit, for example. The coding unit may be acquired by partitioning a coding tree unit or a largest coding unit. The reconstructed image signal decoded and output through the image decoding apparatus 200 may be reproduced through a reproducing apparatus (not shown).

The image decoding apparatus 200 may receive a signal output from the image encoding apparatus of FIG. 2 in the form of a bitstream. The received signal may be decoded through the entropy decoder 210. For example, the entropy decoder 210 may parse the bitstream to derive information (e.g., video/image information) necessary for image reconstruction (or picture reconstruction). The video/image information may further include information on various parameter sets such as an adaptation parameter set (APS), a picture parameter set (PPS), a sequence parameter set (SPS), or a video parameter set (VPS). In addition, the video/image information may further include general constraint information. The image decoding apparatus may further decode picture based on the information on the parameter set and/or the general constraint information. Signaled/received information and/or syntax elements described in the present disclosure may be decoded through the decoding procedure and obtained from the bitstream. For example, the entropy decoder 210 decodes the information in the bitstream based on a coding method such as exponential Golomb coding, CAVLC, or CABAC, and output values of syntax elements required for image reconstruction and quantized values of transform coefficients for residual. More specifically, the CABAC entropy decoding method may receive a bin corresponding to each syntax element in the bitstream, determine a context model using a decoding target syntax element information, decoding information of a neighboring block and a decoding target block or information of a symbol/bin decoded in a previous stage, and perform arithmetic decoding on the bin by predicting a probability of occurrence of a bin according to the determined context model, and generate a symbol corresponding to the value of each syntax element. In this case, the CABAC entropy decoding method may update the context model by using the information of the decoded symbol/bin for a context model of a next symbol/bin after determining the context model. The information related to the prediction among the information decoded by the entropy decoder 210 may be provided to the prediction unit (the inter prediction unit 260 and the intra prediction unit 265), and the residual value on which the entropy decoding was performed in the entropy decoder 210, that is, the quantized transform coefficients and related parameter information, may be input to the dequantizer 220. In addition, information on filtering among information decoded by the entropy decoder 210 may be provided to the filter 240. Meanwhile, a receiver (not shown) for receiving a signal output from the image encoding apparatus may be further configured as an internal/external element of the image decoding apparatus 200, or the receiver may be a component of the entropy decoder 210.

Meanwhile, the image decoding apparatus according to the present disclosure may be referred to as a video/image/picture decoding apparatus. The image decoding apparatus may be classified into an information decoder (video/image/picture information decoder) and a sample decoder (video/image/picture sample decoder). The information decoder may include the entropy decoder 210. The sample decoder may include at least one of the dequantizer 220, the inverse transformer 230, the adder 235, the filter 240, the memory 250, the inter prediction unit 160 or the intra prediction unit 265.

The dequantizer 220 may dequantize the quantized transform coefficients and output the transform coefficients. The dequantizer 220 may rearrange the quantized transform coefficients in the form of a two-dimensional block. In this case, the rearrangement may be performed based on the coefficient scanning order performed in the image encoding apparatus. The dequantizer 220 may perform dequantization on the quantized transform coefficients by using a quantization parameter (e.g., quantization step size information) and obtain transform coefficients.

The inverse transformer 230 may inversely transform the transform coefficients to obtain a residual signal (residual block, residual sample array).

The prediction unit may perform prediction on the current block and generate a predicted block including prediction samples for the current block. The prediction unit may determine whether intra prediction or inter prediction is applied to the current block based on the information on the prediction output from the entropy decoder 210 and may determine a specific intra/inter prediction mode (prediction technique).

It is the same as described in the prediction unit of the image encoding apparatus 100 that the prediction unit may generate the prediction signal based on various prediction methods (techniques) which will be described later.

The intra prediction unit 265 may predict the current block by referring to the samples in the current picture. The description of the intra prediction unit 185 is equally applied to the intra prediction unit 265.

The inter prediction unit 260 may derive a predicted block for the current block based on a reference block (reference sample array) specified by a motion vector on a reference picture. In this case, in order to reduce the amount of motion information transmitted in the inter prediction mode, motion information may be predicted in units of blocks, subblocks, or samples based on correlation of motion information between the neighboring block and the current block. The motion information may include a motion vector and a reference picture index. The motion information may further include inter prediction direction (L0 prediction, L1 prediction, Bi prediction, etc.) information. In the case of inter prediction, the neighboring block may include a spatial neighboring block present in the current picture and a temporal neighboring block present in the reference picture. For example, the inter prediction unit 260 may configure a motion information candidate list based on neighboring blocks and derive a motion vector of the current block and/or a reference picture index based on the received candidate selection information. Inter prediction may be performed based on various prediction modes, and the information on the prediction may include information indicating a mode of inter prediction for the current block.

The adder 235 may generate a reconstructed signal (reconstructed picture, reconstructed block, reconstructed sample array) by adding the obtained residual signal to the prediction signal (predicted block, predicted sample array) output from the prediction unit (including the inter prediction unit 260 and/or the intra prediction unit 265). If there is no residual for the block to be processed, such as when the skip mode is applied, the predicted block may be used as the reconstructed block. The description of the adder 155 is equally applicable to the adder 235. The adder 235 may be called a reconstructor or a reconstructed block generator. The generated reconstructed signal may be used for intra prediction of a next block to be processed in the current picture and may be used for inter prediction of a next picture through filtering as described below.

The filter 240 may improve subjective/objective image quality by applying filtering to the reconstructed signal. For example, the filter 240 may generate a modified reconstructed picture by applying various filtering methods to the reconstructed picture and store the modified reconstructed picture in the memory 250, specifically, a DPB of the memory 250. The various filtering methods may include, for example, deblocking filtering, a sample adaptive offset, an adaptive loop filter, a bilateral filter, and the like.

The (modified) reconstructed picture stored in the DPB of the memory 250 may be used as a reference picture in the inter prediction unit 260. The memory 250 may store the motion information of the block from which the motion information in the current picture is derived (or decoded) and/or the motion information of the blocks in the picture that have already been reconstructed. The stored motion information may be transmitted to the inter prediction unit 260 so as to be utilized as the motion information of the spatial neighboring block or the motion information of the temporal neighboring block. The memory 250 may store reconstructed samples of reconstructed blocks in the current picture and transfer the reconstructed samples to the intra prediction unit 265.

In the present disclosure, the embodiments described in the filter 160, the inter prediction unit 180, and the intra prediction unit 185 of the image encoding apparatus 100 may be equally or correspondingly applied to the filter 240, the inter prediction unit 260, and the intra prediction unit 265 of the image decoding apparatus 200.

**Overview of transform/inverse transform**

As described above, the encoding apparatus may derive a residual block (residual samples) based on a block (prediction blocks) predicted through intra/inter/IBC prediction, and derive quantized transform coefficients by applying transform and quantization to the derived residual samples. Information on the quantized transform coefficients (residual information) may be included and encoded in a residual coding syntax and output in the form of a bitstream. The decoding apparatus may acquire and decode information on the quantized transform coefficients (residual information) from the bitstream to derive quantized transform coefficients. The decoding apparatus may derive residual samples through dequantization/inverse transform based on the quantized transform coefficients. As described above, at least one of quantization/dequantization and/or transform/inverse transform may be skipped. When quantization/dequatization is skipped, the quantized transform coefficient may be referred to as a transform coefficient. When transform/inverse transform is skipped, the transform coefficient may be referred to as a coefficient or a residual coefficient or may still be referred to a transform coefficient for uniformity of expression. Whether transform/inverse transform is skipped may be signaled based on transform_skip _flag.

In addition, in the present disclosure, a quantized transform coefficient and a transform coefficient may be referred to as a transform coefficient and a scaled transform coefficient, respectively. In this case, the residual information may include information about the transform coefficient(s), and the information about the transform coefficient(s) may be signaled through residual coding syntax. Transform coefficients may be derived based on the residual information (or information about the transform coefficient(s)), and scaled transform coefficients may be derived through inverse transform (scaling) of the transform coefficients. Residual samples may be derived based on inverse transform (transform) of the scaled transform coefficients. This may be similarly applied/expressed in other parts of the present disclosure.

Transform/inverse transform may be performed based on transform kernel(s). For example, according to the present disclosure, a multiple transform selection (MTS) scheme is applicable. In this case, some of a plurality of transform kernel sets may be selected and applied to a current block. A transform kernel may be referred to as various terms such as a transform matrix or a transform type. For example, the transform kernel set may indicate a combination of a vertical-direction transform kernel (vertical transform kernel) and a horizontal-direction transform kernel (horizontal transform kernel).

For example, MTS index information (or mts_idx syntax element) may be generated/encoded in an encoding apparatus and signaled to a decoding apparatus to indicate one of the transform kernel sets. For example, a transform kernel set according to the value of the MTS index information may be derived as shown in Table 1.

[Table 1]

| tu_mts_idx[ x0 ][ y0 ] | 0 | 1 | 2 | 3 | 4 |
|---|---|---|---|---|---|
| trTypeHor | 0 | 1 | 2 | 1 | 2 |
| trTypeVer | 0 | 1 | 1 | 2 | 2 |

Table 1 shows tyTypeHor and trTypeVer values according to tu_mts_idx[x0][y0].

For example, the transform kernel set may be determined as shown in Table 2 based on cu_sbt_horizontal_flag and cu_sbt_pos_flag.

[Table 2]

| cu_sbt_horizontal_flag | cu_sbt_pos_flag | trTypeHor | trTypeVer |
|---|---|---|---|
| 0 | 0 | 2 | 1 |
| 0 | 1 | 1 | 1 |
| 1 | 0 | 1 | 2 |
| 1 | 1 | 1 | 1 |

Table 2 shows tyTypeHor and trTypeVer values according to cu_sbt_horizontal _flag and cu_sbt_pos_flag. Here, cu_sbt_horizontal_flag equal to 1 may indicate that a current coding unit is horizontally split into two transform blocks. In contrast, cu_sbt_horizontal_flag equal to 0 may indicate that the current coding unit is vertically split into two transform blocks. In addition, cu_sbt_pos_flag equal to 1 may indicate that the syntax elements tu_cbf_luma, tu_cbf_cb, and tu_cbf_cr of a first transform unit in the current coding unit are not present in the bitstream. In contrast, cu_sbt_pos_flag equal to 0 may indicate that the syntax elements tu_cbf_luma, tu_cbf_cb, and tu_cbf_cr of a second transform unit in the current coding unit are not in the bitstream.

Meanwhile, in Tables 1 and 2, trTypeHor may represent a horizontal-direction transform kernel, and trTypeVer may represent a vertical-direction transform kernel. A trTypeHor/trTypeVer value of 0 may indicate DCT2, a trTypeHor/trTypeVer value of 1 may indicate DST7, and a trTypeHor/trTypeVer value of 2 may indicate DCT8. However, this is an example, and different values may be mapped to different DCT/DST by promise.

Table 3 exemplarily shows basis functions for DCT2, DCT8, and DST7 described above.

[Table 3]

| Transform Type | Basis function $T_i(j)$, $i,j$ = 0, 1,..., $N$-1 |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ where, $$\omega_0 = \begin{cases} \sqrt{\frac{2}{N}} & i = 0 \\ 1 & i \neq 0 \end{cases}$$ |
| DCT-VIII | $$T_i(j) = \sqrt{\frac{4}{2N+1}} \cdot \cos\left(\frac{\pi \cdot (2i+1) \cdot (2j+1)}{4N+2}\right)$$ |
| DST-VII | $$T_i(j) = \sqrt{\frac{4}{2N+1}} \cdot \sin\left(\frac{\pi \cdot (2i+1) \cdot (j+1)}{2N+1}\right)$$ |

In the present disclosure, the MTS-based transform is applied as primary transform, and secondary transform may be further applied. The secondary transform may be applied only to coefficients in the upper left wxh region of a coefficient block to which the primary transform is applied, and may be called reduced secondary transform (RST). For example, w and/or h may be 4 or 8. In transform, the first transform and the second transform may be sequentially applied to the residual block, and in the inverse transform, the inverse secondary transform and the inverse primary transform may be sequentially applied to the transform coefficients. The secondary transform (RST transform) may be called low frequency coefficients transform (LFCT) or low frequency non-separable transform (LFNST). The inverse secondary transform may be called inverse LFCT or inverse LFNST.

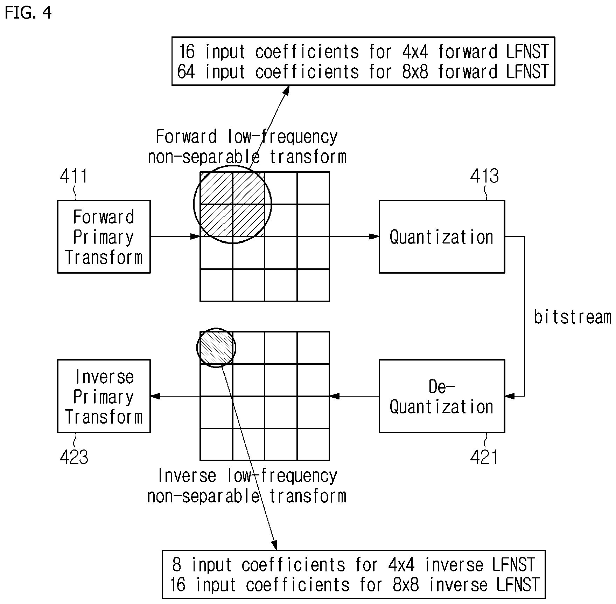

FIG. 4 is a view illustrating an LFNST application method.

Referring to FIG. 4, LFNST is applicable between forward primary transform 411 and quantization 413 at an encoder stage, and is applicable between dequantization 421 and inverse primary transform (or primary inverse transform) 423 at a decoder stage.

In LFNST, 4x4 non-separable transform or 8x8 non-separable transform may be (selectively) applied depending on the block size. For example, 4x4 LFNST may be applied to relatively small blocks (i.e., min (width, height) < 8), and 8x8 LFNST may be applied to relatively large blocks (i.e., min (width, height) > 4). In FIG. 4, as an example, it is shown that 4x4 forward LFNST is applied to 16 input coefficients, and 8x8 forward LFNST is applied to 64 input coefficients. In addition, in FIG. 4, as an example, it is shown that 4x4 backward LFNST may be applied to 8 input coefficients, and 8x8 inverse LFNST may be applied to 16 input coefficients.

In LFNST, a total of four transform sets and two non-separable transform matrices (kernels) for each transform set may be used. Mapping from an intra prediction mode to a transform set may be predefined as shown in Table 4.

[Table 4]

| IntraPredMode | Tr. set index |
|---|---|
| IntraPredMode < 0 | 1 |
| 0 <= IntraPredMode <= 1 | 0 |
| 2 <= IntraPredMode <= 12 | 1 |
| 13 <= IntraPredMode <= 23 | 2 |

(continued)

| IntraPredMode | Tr. set index |
|---|---|
| 24 <= IntraPredMode <= 44 | 3 |
| 45 <= IntraPredMode <= : 55 | 2 |
| 56 <= IntraPredMode<= 80 | 1 |
| 81 <= IntraPredMode<= 83 | 0 |

Referring to Table 4, if three CCLM modes with prediction mode numbers of 81 to 83 (i.e., $81 \leq IntraPredMode \leq 83$) are used for a current block, transform set 0 may be selected for a current chroma block. For each transform set, the selected non-separable secondary transform candidate may be additionally specified by an explicitly signaled LFNST index. The index may be signaled within the bitstream once per Intra CU after the transform coefficients.

Meanwhile, transform/inverse transform may be performed in units of CU or TU. That is, transform/inverse transform is applicable to residual samples in a CU or residual samples in a TU. A CU size may be equal to a TU size or a plurality of TUs may be present in a CU region. Meanwhile, the CU size may generally indicate a luma component (sample) CB size. The TU size may generally indicate a luma component (sample) TB size. A chroma component (sample) CB or TB size may be derived based on the luma component (sample) CB or TB size depending on a component ratio according to a color format (chroma format) (e.g., 4:4:4, 4:2:2, 4:2:0, etc.). The TU size may be derived based on maxTbSize. For example, when the CU size is greater than maxTbSize, a plurality of TUs (TBs) of maxTbSize may be derived from the CU and transform/inverse transform may be performed in units of TU (TB). maxTbSize may be considered to determine whether to apply various intra prediction types such as ISP. Information on maxTbSize may be predetermined or may be generated and encoded in the encoding apparatus and signaled to the decoding apparatus.

As described above, transform may be applied to residual blocks. This is to decorrelate residual blocks as much as possible, concentrate coefficients at low frequencies, and create a zero tail at an end of a block. A transform part in JEM software includes two main functions: core transform and secondary transform. The core transform consists of DCT (discrete cosine transform) and DST (discrete sine transform) families that are applied to all rows and columns of the residual block. Secondary transform may then be additionally applied to the upper left corner of the output of the core transform. Similarly, the inverse transform may be applied in the following order: secondary inverse transform and core inverse transform. Specifically, secondary inverse transform may be applied to the upper left corner of the coefficient block. The core inverse transform is then applied to the rows and columns of the output of the secondary inverse transform. Core transform/inverse transform may be referred to as primary transform/inverse transform.

## Overview of AMT (Adaptive multiple core transform)

In addition to the existing DCT-2 and 4x4 DST-7, the adaptive multiple transform or explicit multiple transform (AMT or EMT) technique may be used for residual coding for interand intra-coded blocks. Hereinafter, AMT and EMT will be used interchangeably. In AMT, in addition to existing transforms, multiple transforms selected from DCT/DST families may be used. The newly introduced transform matrices in JEM are DST-7, DCT-8, DST-1, and DCT-5. The basis functions of DST/DCT used in AMT are shown in Table 5.

[Table 5]

| Transform | Basis function $T_i(j)$, $i,j=0, 1,..., N-1$ |
|---|---|
| DCT-II | $$T_i(j) = \omega_0 \cdot \sqrt{\frac{2}{N}} \cdot \cos\left(\frac{\pi \cdot i \cdot (2j+1)}{2N}\right)$$ where $\omega_0 = \begin{cases} \sqrt{\frac{2}{N}} & i = 0 \\ 1 & i \neq 0 \end{cases}$ |

(continued)

| Transform | Basis function $T_i(j)$, $i,j=0, 1,..., N$-1 |
|---|---|
| DCT-V | $T_i(j) = \omega_0 \cdot \omega_1 \cdot \sqrt{\frac{2}{2N-1}} \cdot \cos\left(\frac{2\pi \cdot i \cdot j}{2N-1}\right)$, where $\omega_0 = \begin{cases} \sqrt{\frac{2}{N}} & i = 0 \\ 1 & i \neq 0 \end{cases}$, $\omega_1 = \begin{cases} \sqrt{\frac{2}{N}} & j = 0 \\ 1 & j \neq 0 \end{cases}$ |
| DCT-VIII | $T_i(j) = \sqrt{\frac{4}{2N+1}} \cdot \cos\left(\frac{\pi \cdot (2i+1) \cdot (2j+1)}{4N+2}\right)$ |
| DST-I | $T_i(j) = \sqrt{\frac{2}{N+1}} \cdot \sin\left(\frac{\pi \cdot (i+1) \cdot (j+1)}{N+1}\right)$ |
| DST-VII | $T_i(j) = \sqrt{\frac{4}{2N+1}} \cdot \sin\left(\frac{\pi \cdot (2i+1) \cdot (j+1)}{2N+1}\right)$ |

EMT may be applied to CUs with a width and height less than or equal to 64, and whether EMT is applied may be controlled by a CU level flag. For example, if the CU level flag is 0, DCT-2 is applied to the CU to encode the residue. For a luma coding block within a CU to which EMT is applied, two additional flags are signaled to identify horizontal and vertical transform to be used. In JEM, the residual of a block may be coded in a transform skip mode. For intra residual coding, due to different residual statistics of different intra prediction modes, a mode-dependent transform candidate selection process is used. For example, three transform subsets are defined as shown in Table 6, and the transform subset is selected based on an intra prediction mode as shown in Table 7.

[Table 6]

| Transform Set | Transform Candidates |
|---|---|
| 0 | DST-VII, DCT-VIII |
| 1 | DST-VII, DST-1 |
| 2 | DST-VII, DCT-VIII |

[Table 7]

| Intra Mode | 0 | 1 | 2 | 3 | 4 | 5 | 6 | 7 | 8 | 9 | 10 | 11 | 12 | 13 | 14 | 15 | 16 | 17 |
|---|---|---|---|---|---|---|---|---|---|---|---|---|---|---|---|---|---|---|
| V | 2 | 1 | 0 | 1 | 0 | 1 | 0 | 1 | 0 | 1 | 0 | 1 | 0 | 1 | 0 | 0 | 0 | 0 |
| H | 2 | 1 | 0 | 1 | 0 | 1 | 0 | 1 | 0 | 1 | 0 | 1 | 0 | 1 | 2 | 2 | 2 | 2 |
| Intra Mode | 18 | 19 | 20 | 21 | 22 | 23 | 24 | 25 | 26 | 27 | 28 | 29 | 30 | 31 | 32 | 33 | 34 | |
| V | 0 | 0 | 0 | 0 | 0 | 1 | 0 | 1 | 0 | 1 | 0 | 1 | 0 | 1 | 0 | 1 | 0 | |
| H | 2 | 2 | 2 | 2 | 2 | 1 | 0 | 1 | 0 | 1 | 0 | 1 | 0 | 1 | 0 | 1 | 0 | |
| Intra Mode | 35 | 36 | 37 | 38 | 39 | 40 | 41 | 42 | 43 | 44 | 45 | 46 | 47 | 48 | 49 | 50 | 51 | 52 |
| V | 1 | 0 | 1 | 0 | 1 | 0 | 1 | 0 | 1 | 0 | 1 | 2 | 2 | 2 | 2 | 2 | 2 | 2 |
| H | 1 | 0 | 1 | 0 | 1 | 0 | 1 | 0 | 1 | 0 | 1 | 0 | 0 | 0 | 0 | 0 | 0 | 0 |
| Intra Mode | 53 | 54 | 55 | 56 | 57 | 58 | 59 | 60 | 61 | 62 | 63 | 64 | 65 | 66 | | | | |
| V | 2 | 2 | 1 | 0 | 1 | 0 | 1 | 0 | 1 | 0 | 1 | 0 | 1 | 0 | | | | |
| H | 0 | 0 | 1 | 0 | 1 | 0 | 1 | 0 | 1 | 0 | 1 | 0 | 1 | 0 | | | | |

With the subset concept, the transform subset is first identified based on Table 6 using the intra prediction mode of the CU with CU-level EMT_CU_flag equal to 1. Then, for each of the horizontal (EMT_TU_horizontal_flag) and vertical (EMT_TU_vertical_flag) transforms, one of the two transform candidates in the identified transform subset is selected based on explicit signaling using flags according to Table 7.

[Table 8]

| Configuration group | | Horizontal (row) transform | Vertical (column) transform | 35 intra Prediction modes | 67 intra Prediction modes |
|---|---|---|---|---|---|
| Group 0 (G0) | 0 | DST7 | DST7 | 0 | 0 |
| | 1 | DCT5 | DST7 | | |
| | 2 | DST7 | DCT5 | | |
| | 3 | DCT5 | DCT5 | | |
| Group 1 (G1) | 0 | DST7 | DST7 | 1, 3, 5, 7, 13, 15, 17, 19, 21, 23, 29, 31, 33 | 1, 3, 5, 7, 9, 11, 13, 23, 25, 27, 29, 31, 33, 35, 37, 39, 41, 43, 45, 55, 57, 59, 61, 63, 65 |
| | 1 | DST1 | DST7 | | |
| | 2 | DST7 | DST1 | | |
| | 3 | DST1 | DST1 | | |
| Group 2 (G2) | 0 | DST7 | DST7 | 2, 4, 6, 14, 16, 18, 20, 22, 30, 32, 34 | 2, 4, 6, 8, 10, 12, 24, 26, 28, 30, 32, 34, 36, 38, 40, 42, 44, 56, 58, 60, 64, 66 |
| | 1 | DCT8 | DST7 | | |
| | 2 | DST7 | DCT8 | | |
| | 3 | DCT8 | DCT8 | | |
| Group 3 (G3) | 0 | DST7 | DST7 | 8, 9, 10, 11, 12 (Neighboring angles to horizontal directions) | 14, 15, 16, 17, 18, 19, 20, 21, 22 (Neighboring angles to horizontal directions) |
| | 1 | DCT5 | DST7 | | |
| | 2 | DST7 | DCT8 | | |
| | 3 | DCT5 | DCT8 | | |
| Group 4 (G4) | 0 | DST7 | DST7 | 24, 25, 26, 27, 28 (Neighboring angles to vertical directions) | 46, 47, 48, 49, 50, 51, 52, 53, 54 (Neighboring angles to vertical directions) |
| | 1 | DCT8 | DST7 | | |
| | 2 | DST7 | DCT5 | | |
| | 3 | DCT8 | DCT5 | | |
| Group 5 (G5) | 0 | DCT8 | DCT8 | Inter prediction | Inter prediction |
| | 1 | DST7 | DCT8 | | |
| | 2 | DCT8 | DST7 | | |
| | 3 | DST7 | DST7 | | |

Table 8 shows a transform configuration group to which AMT is applied.

Referring to Table 8, transform configuration groups are determined based on the prediction mode, and the number of groups may be a total of 6 (G0 to G5). In addition, G0 to G4 correspond to a case where intra prediction is applied, and G5 indicates transform combinations (or a transform set, a transform combination set) applied to the residual block generated by inter prediction.

One transform combination consists of horizontal transform (or row transform) applied to the rows of the corresponding 2D block and a vertical transform (or column transform) applied to the columns.

Here, all transform configuration groups may each have four transform combination candidates. The four transform combination candidates may be selected or determined through transform combination indices of 0 to 3, and the transform combination index may be encoded and transmitted from the encoder to the decoder.

For example, residual data (or residual signal) obtained through intra prediction may have different statistical characteristics depending on the intra prediction mode. Therefore, as shown in Table 8, transforms other than the general cosine transform may be applied to each intra prediction. In the present disclosure, the transform type may be expressed as, for example, DCT-Type 2, DCT-II, or DCT-2.

Table 8 shows the case of using 35 intra prediction modes and the case of using 67 intra prediction modes. A plurality of transform combinations may be applied to each transform configuration group divided in each intra prediction mode column. For example, a plurality of transform combinations may be composed of four (row direction transform, column direction transform) combinations. As a specific example, in group 0, DST-7 and DCT-5 may be applied in both the row (horizontal) direction and the column (vertical) direction and thus a total of 4 combinations are possible.

Since a total of four transform kernel combinations may be applied to each intra prediction mode, a transform combination index for selecting one of them may be transmitted for each transform unit. In the present disclosure, the transform combination index may be referred to as an AMT index and may be expressed as amt_idx.

In addition, in addition to the transform kernels presented in Table 8, there may be a case where DCT-2 is optimal in both the row and column directions due to the characteristics of the residual signal. Therefore, transform may be applied adaptively by defining an AMT flag for each coding unit. Here, if the AMT flag is 0, DCT-2 is applied to both the row direction and column direction, and if the AMT flag is 1, one of four combinations may be selected or determined through the AMT index.

For example, when the AMT flag is 0 and the number of transform coefficients for one transform unit is less than 3, the transform kernels in Table 8 are not applied and DST-7 may be applied to both the row and column directions.

For example, if the transform coefficient values are first parsed and the number of transform coefficients is less than 3, the AMT index is not parsed and DST-7 is applied, thereby reducing the amount of transmitted additional information.

As an example, AMT may be applied only when both the width and height of the transform unit are 32 or less.

As an example, Table 8 may be preset through offline training.

As an example, the AMT index may be defined as one index that may simultaneously indicate a combination of horizontal transform and vertical transform. Alternatively, the AMT index may be defined as a separate horizontal transform index and vertical transform index.

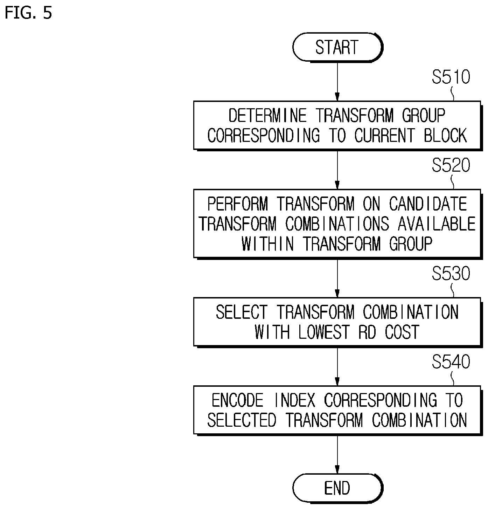

FIG. 5 is a flowchart illustrating an encoding process in which AMT is performed.

AMT may be applied regardless of primary or secondary transform. In other words, there is no restriction that it must be applied to only one of the two, and both may be applied. Here, the primary transform may refer to transform for initially transforming the residual block, and the secondary transform may refer to transform for applying the transform to a block generated as a result of the primary transform.

First, the encoding apparatus may determine a transform group corresponding to a current block (S510). Here, the transform group may refer to the transform group described above with reference to Table 8, but is not limited thereto and may be composed of other transform combinations.

The encoding apparatus may perform transform on candidate transform combinations available within the transform group (S520).

As a result of performing the transform, the encoding apparatus may determine or select a transform combination with the lowest RD (Rate Distortion) cost (S530).

The encoding apparatus may encode a transform combination index corresponding to the selected transform combination (S540).

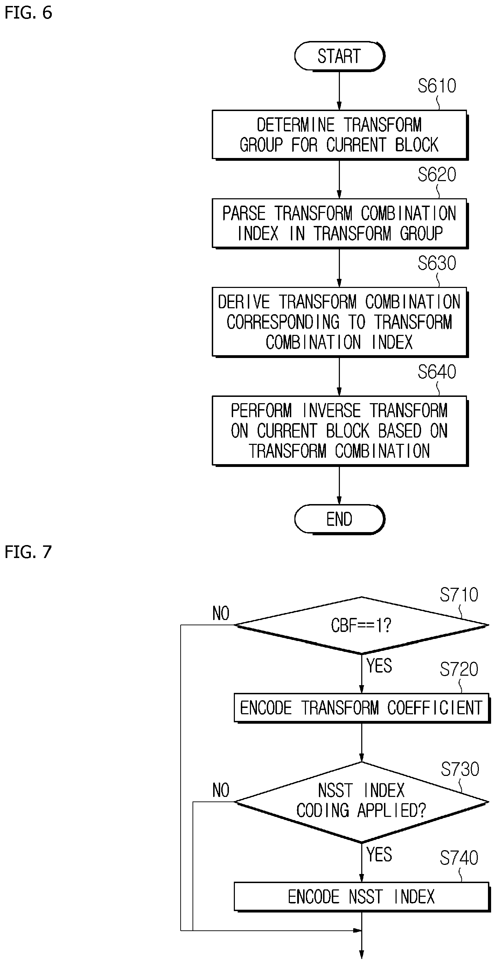

FIG. 6 is a flowchart illustrating a decoding process in which AMT is performed.

First, the decoding apparatus may determine a transform group for a current block (S610).

The decoding apparatus may parse a transform combination index (S620). Here, the transform combination index may correspond to one of a plurality of transform combinations in the transform group. The step S610 of determining the transform group and the step S620 of parsing the transform combination index may be performed simultaneously.

The decoding apparatus may derive a transform combination corresponding to the transform combination index (S630). Here, the transform combination may refer to the transform combination described above with reference to Table 8, but is not limited thereto. In other words, configuration using different transform combinations is also possible.

The decoding apparatus may perform inverse transform on the current block based on the transform combination (S640). If the transform combination consists of row transform and column transform, the row transform may be applied first and then the column transform may be applied. However, this process is not limited to this and may be applied in reverse.

### Overview of secondary transform NSST index coding

For secondary transform/inverse transform, a mode-dependent non-separable secondary transform (MDNSST) may be applied. To maintain low complexity, MDNSST may be applied only to low-frequency coefficients after primary transform. If the width (W) and height (H) of the transform coefficient block are both greater than or equal to 8, 8x8 non-separable secondary transform is applied to the upper left 8x8 region of the transform coefficient block. In contrast, if the width or height is less than 8, a 4x4 non-separable secondary transform is applied, and the 4x4 non-separable secondary transform may performed on the upper left min(8, W) x min(8, H) of the transform coefficient block. Here, min(A, B) is a function that outputs the smaller value between A and B.

For both 4x4 and 8x8 block sizes, there can be a total of 35x3 non-separable secondary transforms. Here, 35 may mean the number of transform sets specified by the intra prediction mode, and 3 may mean the number of NSST candidates for each intra prediction mode. Mapping from the intra prediction mode to the transform set may be defined as shown in Table 9.

[Table 9]

| intra mode | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
|---|---|---|---|---|---|---|---|---|---|---|---|---|---|---|---|---|---|---|---|---|---|---|---|---|---|---|---|---|---|---|---|---|---|---|
| set | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 | 33 |
| intra mode | 34 | 35 | 36 | 37 | 38 | 39 | 40 | 41 | 42 | 43 | 44 | 45 | 46 | 47 | 48 | 49 | 50 | 51 | 52 | 53 | 54 | 55 | 56 | 57 | 58 | 59 | 60 | 61 | 62 | 63 | 64 | 65 | 66 | 67 (LM) |
| set | 34 | 33 | 32 | 31 | 30 | 29 | 28 | 27 | 26 | 25 | 24 | 23 | 22 | 21 | 20 | 19 | 18 | 17 | 16 | 15 | 14 | 13 | 12 | 11 | 10 | 9 | 8 | 7 | 6 | 5 | 4 | 3 | 2 | NULL |

To indicate a transform kernel among the transform sets, an NSST index (NSST idx) may be coded. If NSST is not applied, an NSST index with a value of 0 may be signaled.

Secondary transform (e.g., MDNSST) is not applied to a block coded in a transform skip mode. If the MDNSST index is signaled for a CU and is not zero, MDNSST is not used for a block of a component coded in the transform skip mode within the CU. The overall coding structure including coefficient coding and NSST index coding is shown in FIGS. 6 and 7. A coded block flag (CBF) is encoded to determine whether coefficient coding or NSST coding is performed. In FIGS. 6 and 7, the CBF flag may represent a luma block cbf flag (cbf_luma flag) or a chroma block cbf flag (cbf_cb flag or cbf_cr flag). Transform coefficients are coded when the CBF flag is 1.

FIG. 7 is a flowchart illustrating an encoding process in which NSST is performed.

Referring to FIG. 7, the encoding apparatus checks whether a CBF flag is 1 (S710). If the CBF flag is 0 ('NO' in S710), the encoding apparatus does not perform transform coefficient encoding and NSST index encoding. In contrast, when the CBF flag is 1 ('YES' in S710), the encoding apparatus performs encoding on the transform coefficient (S720). Afterwards, the encoding apparatus determines whether to perform NSST index coding (S730) and performs NSST index coding (S740). If NSST index coding is not applied ('NO' in S730), the encoding apparatus may terminate the transform procedure without applying NSST and perform subsequent steps (e.g., quantization).

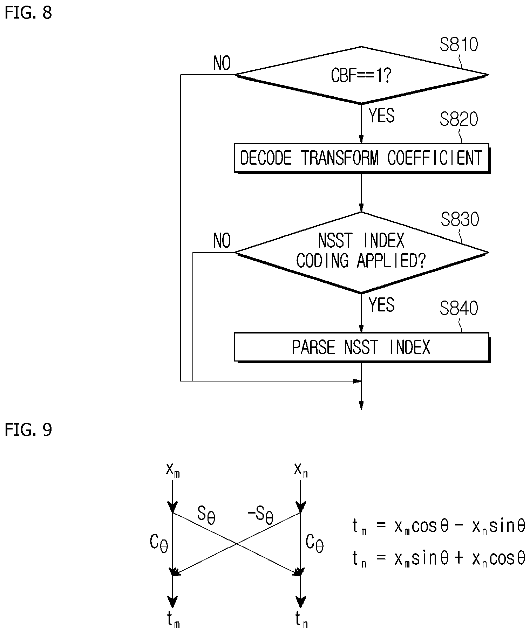

FIG. 8 is a flowchart illustrating a decoding process in which NSST is performed.

Referring to FIG. 8, the decoding apparatus checks whether a CBF flag is 1 (S810). If the CBF flag is 0 ('NO' in S810), the decoding apparatus does not perform transform coefficient decoding and NSST index decoding. In contrast, when the CBF flag is 1 ('YES' in S810), the decoding apparatus performs decoding on the transform coefficient (S820). Thereafter, the decoding apparatus determines whether to code the NSST index (S830) and parses the NSST index (S840).

NSST may not be applied to a block to which primary transform has been applied, for example, the entire TU, but only to the upper left 8x8 region or 4x4 region of the block. For example, if the block size is 8x8 or more, 8x8 NSST may be applied, and if the block size is less than 8x8, 4x4 NSST may be applied. In addition, when 8x8 NSST is applied, 4x4 NSST may be applied to each 4x4 block. Both 8x8 NSST and 4x4 NSST follow the transform set configuration described above. 8x8 NSST may have 64 input data and 64 output data, and 4x4 NSST may have 16 inputs and 16 outputs.

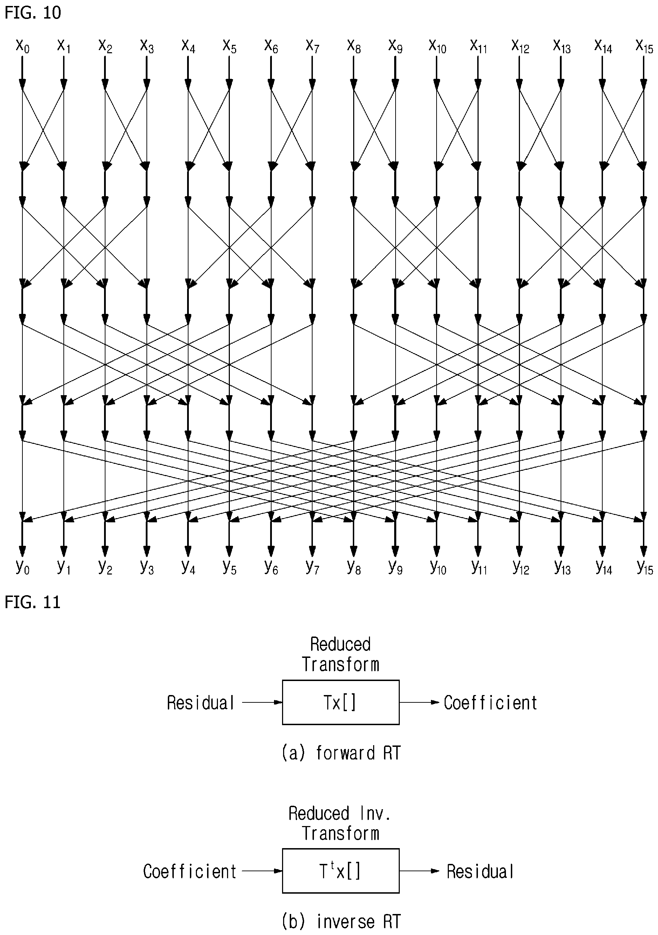

FIGS. 9 and 10 are views illustrating a method of performing NSST. FIG. 9 shows Givens rotation, and FIG. 10 shows a round configuration of 4x4 NSST consisting of a Givens rotation layer and permutations.

Both 8x8 NSST and 4x4 NSST may be composed of hierarchical combinations of Givens rotations. A matrix corresponding to one Givens rotation is as shown in Equation 1, and a matrix product is expressed in a diagram as shown in FIG. 9.

[Equation 1]

$$R_\theta = \begin{bmatrix} \cos\theta & -\sin\theta \\ \sin\theta & \cos\theta \end{bmatrix}$$

As shown in FIG. 9, two output data $t_m$ and $t_n$ may be obtained by applying the matrix of Equation 1 to the two input data $x_m$ and $x_n$.

Since one Givens rotation is to rotate two data, 32 or 8 Givens rotations are needed to process 64 data (for 8x8 NSST) or 16 data (for 4x4 NSST), respectively. Therefore, a Givens rotation layer may be constructed by grouping 32 or 8 Givens rotations.

As shown in FIG. 10, output data for one Givens rotation layer is forwarded as input data for a next Givens rotation layer through permutation (or shuffling). As shown in FIG. 10, the permutation pattern is defined regularly, and in the case of 4x4 NSST, four Givens rotation layers and the corresponding permutations form one round. 4x4 NSST is performed in 2 rounds, and 8x8 NSST is performed in 4 rounds. Different rounds use the same permutation pattern, but Givens rotation angles applied may be different. Therefore, it is necessary to store angle data for all Givens rotations that configure each transform.

As a final step, one permutation is finally performed on the data output through the Givens rotation layers, and information about the permutation is stored separately for each transform. In the case of forward NSST, the permutation is performed last, and in the case of backward NSST, the inverse process of the permutation (i.e., inverse-direction permutation or inverse permutation) is performed first.

In the case of backward NSST, the Givens rotation layers and permutations applied in forward NSST are applied in inverse order, and a negative (-) value is added to each Givens rotation angle.

## Overview of reduced secondary transform (RST)

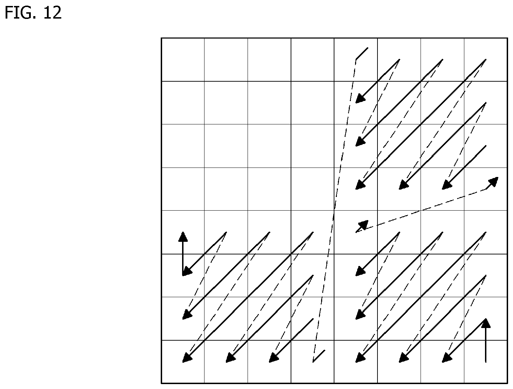

FIGS. 11 and 12 are views illustrating a method of performing RST.

Assuming that an orthogonal matrix representing one transform has the form of NxN, RT (reduced transform) leaves only Rout of N transform basis vectors (R < N). The matrix for forward RT that generates the transform coefficient may be defined as Equation 2.

[Equation 2]

$$T_{RxN} = \begin{bmatrix} t_{11} & t_{12} & t_{13} & \dots & t_{1N} \\ t_{21} & t_{22} & t_{23} & & t_{2N} \\ & & \vdots & \ddots & \vdots \\ t_{R1} & t_{R2} & t_{R3} & \cdots & t_{RN} \end{bmatrix}$$

Since the matrix for backward RT is the transpose matrix of the forward RT matrix, the application of forward RT and backward RT may be shown in (a) and (b) of FIG. 11.

The RT applied to the upper left 8x8 block of the transform coefficient block to which primary transform is applied may be referred to as 8x8 RST. When the value of R is set to 16 in Equation 2, the forward 8x8 RST has the form of a 16x64 matrix, and the backward 8x8 RST has the form of a 64x16 matrix. The transform set configuration shown in Table 9 may also be applied to 8x8 RST. That is, 8x8 RST may be determined according to the transform set in Table 9. Since one transform set consists of two or three transforms depending on the intra prediction mode, one of up to four transforms may be selected, including the case where the secondary transform is not applied (one transform may correspond to an identity matrix). Assuming that indices of 0, 1, 2, and 3 are assigned to each of the four transforms (for example, index 0 may be assigned to the identity matrix, i.e., the case where no secondary transform is applied), the applied transform may be specified by signaling a syntax element corresponding to the NSST index for each transform coefficient block. That is, for the 8x8 upper left block through the NSST index, 8x8 NSST may be specified in the case of NSST, and 8x8 RST may be specified in RST configuration.

When applying the forward 8x8 RST shown in Equation 2 above, since 16 valid transform coefficients are generated, it can be seen that the 64 input data constituting the 8x8 region are reduced to 16 output data, and from the perspective of a two-dimensional region, only 1/4 of the region is filled with valid transform coefficients. Accordingly, 16 output data obtained by applying forward 8x8 RST are filled in the upper left region of FIG. 12.

FIG. 12 shows a process of performing the reverse scan from the 64th to the 17th according to the reverse scan order.

In FIG. 12, the upper left 4x4 region becomes a ROI (region of interest) filled with valid transform coefficients, and the remaining region is left empty. The empty region may be filled with a default value of 0. If a non-zero valid transform coefficient is found in a region other than the ROI of FIG. 12, it is certain that 8x8 RST is not applied and thus NSST index coding may be skipped. Conversely, if a non-zero transform coefficient is not found in a region other than the ROI of FIG. 12 (i.e., the region other than the ROI is filled with 0), 8x8 RST is likely to be applied, and thus an NSST index may be coded. Since it is necessary to check the presence or absence of a non-zero transform coefficient, such conditional NSST index coding may be performed after the residual coding process.

In the present disclosure, NSST/RT/RST may be collectively referred to as LFNST, and the NSST index or (R)ST index may be collectively referred to as LFNST index. LFNST may be applied in a non-separable transform format based on a transform kernel (transform matrix or transform matrix kernel) for the low-frequency transform coefficients located in the upper left region of the transform coefficient block.

Hereinafter, embodiments of the present disclosure will be described in detail with reference to the accompanying drawings.

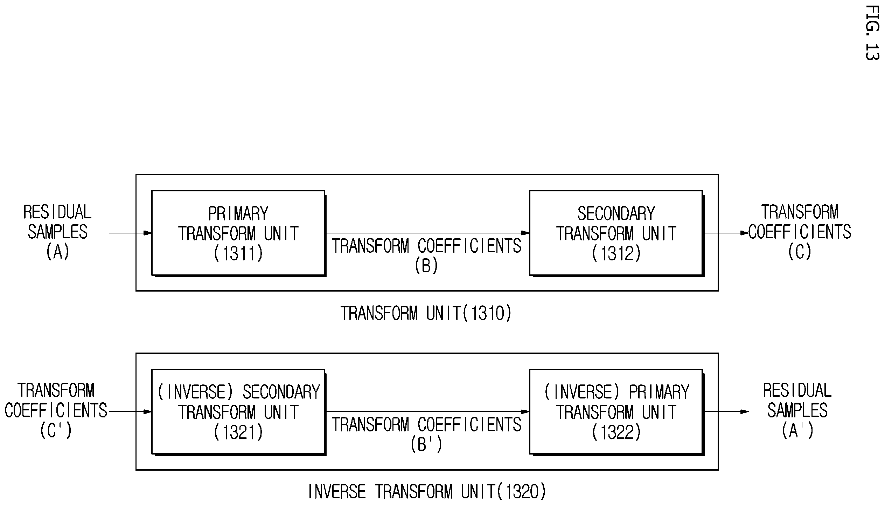

FIG. 13 is a view illustrating a transform and inverse transform process according to an embodiment of the present disclosure. In FIG. 13, a transform unit 1310 may correspond to the transform unit 120 of FIG. 2, and an inverse transform unit 1320 may correspond to the inverse transform unit 150 of FIG. 2 or the inverse transform unit 230 of FIG. 3.

Referring to FIG. 13, the transform unit 1310 may include a primary transform unit 1311 and a secondary transform unit 1312.

The primary transform unit 1311 may generate (primary) transform coefficients B by applying primary transform to residual samples A. In the present disclosure, the primary transform may be referred to as core transform.

The first transform may be performed based on the MTS scheme. When the existing MTS is applied, transform from the spatial domain to the frequency domain is applied to the residual signal (or residual block) based on DCT Type 2, DST Type 7, and DCT Type 8, and transform coefficients (or primary transform coefficients) may be generated. Here, DCT Type 2, DST Type 7, and DCT Type 8 may be referred to as a transform type, transform kernel, or transform core. Examples of basis functions for DCT Type 2, DST Type 7, and DCT Type 8 are as described above with reference to Table 3. However, this is an example and the embodiments of the present disclosure may be applied even when the configuration of the existing MTS kernel is different, that is, may be applied even when it includes a different type of DCT/DST or transform skip.

The existing MTS has a form that applies one kernel in the horizontal direction and applies one kernel in the vertical direction as separable transform. It is generally known that a non-separable transform kernel provides higher encoding/decoding efficiency than a separable transform kernel, but a non-separable transform method is not used in the conventional primary transform.

Accordingly, according to embodiments of the present disclosure, primary transform may be performed based on a non-separable transform kernel. In the present disclosure, primary transform based on a non-separable transform kernel may be referred to as non-separable primary transform or non-separable core transform.

The non-separable primary transform may replace at least one of the existing MTS candidates or may be added as a new MTS candidate. For example, only DCT Type 2 and non-separable primary transform may be used as MTS candidates, or non-separable primary transform may be used as a MTS candidate in addition to DCT Type 2, DST Type 7, and DCT Type 8.

As the non-separable primary transform is included in the MTS candidate, the MTS index (e.g., tu_mts_idx[x0][y0]) table in Table 1 described above may be modified, for example, as shown in Table 10 or Table 11.

[Table 10]

| tu_mts_idx[ x0 ][ y0 ] | 0 | 1 | 2 |
|---|---|---|---|
| trTypeHor | 0 | 1 | 2 |
| trTypeVer | 0 | 1 | 2 |

[Table 11]

| tu_mts_idx[ x0 ][ y0 ] | 0 | 1 | 2 | 3 | 4 | 5 |
|---|---|---|---|---|---|---|
| trTypeHor | 0 | 1 | 2 | 1 | 2 | 3 |
| trTypeVer | 0 | 1 | 1 | 2 | 2 | 3 |

In Tables 10 and 11, trTypeHor may represent a horizontal direction transform kernel, and trTypeVer may represent a vertical direction transform kernel. In the case of Table 10, a trTypeHor/trTypeVer value of 0 indicates DCT type 2, a trTypeHor/trTypeVer value of 1 indicates DST type 7, and a trTypeHor/trTypeVer value of 2 may indicate non-separable primary transform. In the case of Table 11, a trTypeHor/trTypeVer value of 0 may indicate DCT type 2, a trTypeHor/trTypeVer value of 1 may indicate DST type 7, and a trTypeHor/trTypeVer value of 2 may indicate DCT type 8. In addition, a trTypeHor/trTypeVer value of 3 may indicate non-separable primary transform. However, this is only an example, and the embodiments of the present disclosure are not limited thereto.

Since the non-separable primary transform has the property that the horizontal direction transform and the vertical direction transform are not separated, the transform kernel of the non-separable primary transform needs to be the same for the horizontal and vertical directions. Accordingly, according to an embodiment of the present disclosure, when trTypeHor has a value indicating non-separable primary transform, the trTypeVer value may also be constrained to have a value indicating non-separable primary transform. For example, in Table 11, if the trTypeHor value is 3, the trTypeVer value may not be between 0 and 2 and may only be constrained to 3.

Meanwhile, in some embodiments, non-separable primary transform may be added as a separate option from the MTS scheme described above. For example, non-separable primary transform may not be included in the MTS candidate but may be used as an independent transform candidate. In this case, a predetermined first flag (e.g., nspt_flag) may be signaled to indicate whether non-separable primary transform is applied, and a second flag (e.g., mts_flag) indicating whether MTS is applied may be signaled only when a first flag is 0 (i.e., the case of indicating that non-separable primary transform is not applied).

Non-separable primary transform may be performed, for example, with a 4x4 block as input as follows. An example of a 4x4 input block X is as shown in Equation 3.

[Equation 3]

$$X = \begin{bmatrix} X_{00} & X_{01} & X_{02} & X_{03} \\ X_{10} & X_{11} & X_{12} & X_{13} \\ X_{20} & X_{21} & X_{22} & X_{23} \\ X_{30} & X_{31} & X_{32} & X_{33} \end{bmatrix}$$

If the input block X is expressed in the form of a vector, it may be expressed as Equation 4.

[Equation 4]

$$\vec{X} = [X_{00}, X_{01}, X_{02}, X_{03}, X_{10}, X_{11}, X_{12}, X_{13}, X_{20}, X_{21}, X_{22}, X_{23}, X_{30}, X_{31}, X_{32}, X_{33}]^{T}$$

In this case, non-separable primary transform may be calculated as shown in Equation 5.

[Equation 5]

$$\vec{F} = T \cdot \vec{X}$$

Here, $\vec{F}$ represents a transform coefficient vector, T represents a 16x16 non-separable transform matrix, and an operator • means multiplication of the matrix and the vector.

A 16x1 transform coefficient vector $\vec{F}$ may be derived through Equation 5, and $\vec{F}$ may be reconstructed into a 4x4 block according to the scan order (e.g., horizontal, vertical, diagonal, or predetermined/stored scan order). However, this is only an example, and various optimized non-separable transform calculation methods may be used to reduce the computational complexity of the non-separable primary transform.

As such, according to the embodiments of the present disclosure, the primary transform unit 1311 may generate (primary) transform coefficients B by applying non-separable primary transform to the residual samples A.

The secondary transform unit 1312 may generate (secondary) transform coefficients C by applying secondary transform to the (primary) transform coefficients B. In one example, the LFNST described above may be applied as secondary transform. In addition, the (secondary) transform coefficients C may be encoded through quantization and entropy encoding processes and used to generate a bitstream.

Next, the inverse transform unit 1320 may include an (inverse) secondary transform unit 1321 and an (inverse) primary transform unit 1322.

The (inverse) secondary transform unit 1321 applies the (inverse) secondary transform to the dequantized (secondary) transform coefficients C' to generate (primary) (inverse) transform coefficients B'. Here, the (inverse) secondary transform may correspond to the inverse process of the secondary transform performed by the transform unit 1310.

The (inverse) primary transform unit 1322 may generate residual samples A' by applying (inverse) primary transform to the (primary) (inverse) transform coefficients B'.

According to embodiments of the present disclosure, the (inverse) primary transform may include non-separable primary inverse transform. The non-separable primary inverse transform may be included as an MTS candidate or provided as an independent inverse transform candidate. The non-separable primary inverse transform corresponds to the inverse process of the non-separable primary transform, and its specific details are as described above in relation to the non-separable primary transform.

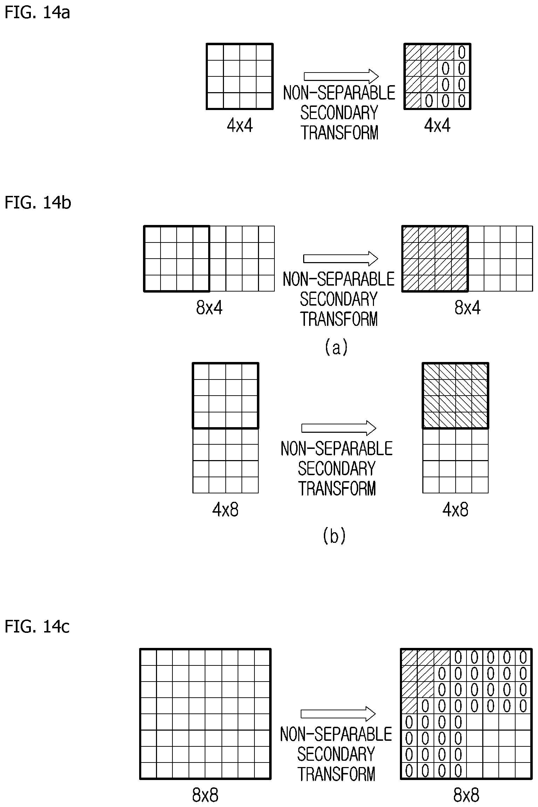

Meanwhile, non-separable primary transform has the same/similar basic properties as non-separable secondary transform in that transform is applied at once without separating the horizontal-direction and vertical-direction transforms. However, both have different characteristics in terms of specific transform methods such as transform target, transform matrix, zero-out range, etc. Hereinafter, with reference to FIGS. 14a to 16d, the difference between non-separable primary transform and non-separable secondary transform will be described in detail.

FIGS. 14a and 14b are views illustrating a non-separable secondary transform process.

FIGS. 14a to 14d show non-separable secondary transform at an encoder stage, that is, a forward non-separable secondary transform process.

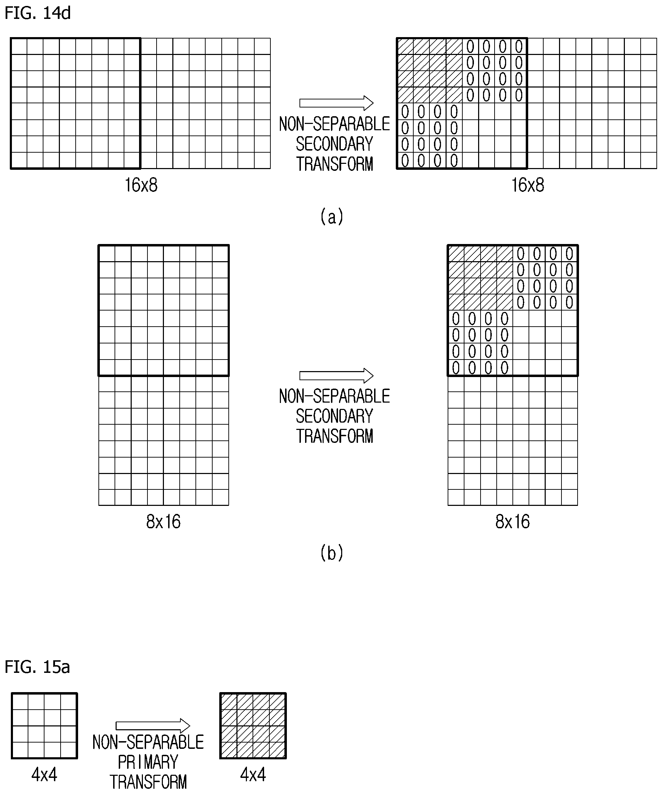

FIG. 14a shows a case where the size of an input block is 4x4, and FIG. 14b shows a case where the size of the input block is 8x4 or 4x8. In addition, FIG. 14c shows a case where the size of the input block is 8x8, and FIG. 14d shows a case where the size of the input block is 16x8 or 8x16.

In FIGS. 14a to 14d, a region indicated by a thick line represents a region to which non-separable secondary transform is applied.

First, referring to FIG. 14a, non-separable secondary transform may be applied to the entire 4x4 input block.

Specifically, a 16x8 non-separable secondary transform matrix may be applied to the 16 (primary) transform coefficients of a 4x4 input block, thereby generating 8 (secondary) transform coefficients. Using a 16x8 matrix is to reduce multiplication complexity in the worst case. As a result of non-separable secondary transform (in the forward direction), in that the number of output coefficients is reduced than the number of input coefficients, such non-separable secondary transform may be called RST (reduced secondary transform).

8 output coefficients may be placed in the upper left region (hatched region) of the 4x4 output block according to the diagonal scan order. In addition, the remaining region not filled with the output coefficients in the 4x4 output block may be filled with a zero value (i.e., zeroing out). In this case, the zero-out region is the lower right region of the 4x4 output block.

Next, referring to (a) of FIG. 14b, non-separable secondary transform may be applied only to the left 4x4 region of the 8x4 input block. This is because non-separable secondary transform is performed in units of 4x4 or 8x8 regions.

Specifically, a 16x16 non-separable secondary transform matrix may be applied to the 16 (primary) transform coefficients in the left 4x4 region, thereby generating 16 (secondary) transform coefficients. Using a 16x16 matrix is to reduce multiplication complexity in the worst case.

16 output coefficients may be placed in the left 4x4 region (hatched region) of the 8x4 output block according to the diagonal scan order. Since the target region (i.e., the left 4x4 region) of non-separable secondary transform is completely filled with output coefficients, zeroing out may not be performed. In addition, in the remaining region where non-separable secondary transform is not applied in the 8x4 output block, (primary) transform coefficients remain as it is.

Referring to (b) of FIG. 14b, non-separable secondary transform may be applied only to the upper 4x4 region of the 4x8 input block. As in (a) of FIG. 14b, this is because non-separable secondary transform is performed in units of 4x4 or 8x8 regions.

Specifically, a 16x16 non-separable secondary transform matrix may be applied to the 16 (primary) transform coefficients in the upper 4x4 region, thereby generating 16 (secondary) transform coefficients.

16 output coefficients may be placed in the upper 4x4 region (hatched region) of the 4x8 output block according to the diagonal scan order. Since the target region of non-separable secondary transform (i.e., upper 4x4 region) is completely filled with output coefficients, zeroing out may not be performed. In addition, in the remaining region where non-separable secondary transform has not been applied in the 4x8 output block, (primary) transform coefficients remain as it is.

Next, referring to FIG. 14c, non-separable secondary transform may be applied to the entire 8x8 input block.

Specifically, a 48x8 non-separable secondary transform matrix may be applied to 48 (primary) transform coefficients of an 8x8 input block, thereby generating 8 (secondary) transform coefficients. Using a 48x8 matrix is to reduce multiplication complexity in the worst case. In the forward non-separable secondary transform, since a 48x1 or 16x1 vector is used as an input vector, only the (primary) transform coefficients in the upper left 4x4 region, upper right 4x4 region, and lower left 4x4 region of the 8x8 input block may be used as the input values of the non-separable secondary transform. In other words, the (primary) transform coefficients in the lower right 4x4 region of the 8x8 input block are not used as input values of the non-separable secondary transform.

8 output coefficients may be placed in the upper left region (hatched region) of the 8x8 output block according to the diagonal scan order. In addition, the remaining region not filled with the output coefficients in the 8x8 output block may be filled with a zero value. At this time, since the lower right 4x4 region of the 8x8 output block was not used as input values of the non-separable secondary transform, zeroing out of the region is not performed and the (primary) transform coefficients remain as it is.

Next, referring to (a) of FIG. 14d, non-separable secondary transform may be applied only to the left 8x8 region of the 16x8 input block. This is because non-separable secondary transform is performed in units of 4x4 or 8x8 regions.

Specifically, a 48x8 non-separable secondary transform matrix may be applied to 48 (primary) transform coefficients of a left 8x8 region, thereby generating 16 (secondary) transform coefficients. Using a 48x16 matrix is to reduce multiplication complexity in the worst case. In the forward non-separable secondary transform, since a 48x1 or 16x1 vector is used as an input vector, (primary) transform coefficients of the lower right 4x4 region of the left 8x8 region are not used as input values of non-separable secondary transform.

16 output coefficients may be placed in the upper left 4x4 region (hatched region) of the 16x8 output block according to the diagonal scan order. In addition, the remaining region not filled with the output coefficients in the 16x8 output block may be filled with a zero value. At this time, since the lower right 4x4 region of the left 8x8 region was not used as input values of the non-separable secondary transform, zeroing out for the region is not performed and the (primary) transform coefficients remain as it is.

Referring to (b) of FIG. 14d, non-separable secondary transform may be applied only to the upper 8x8 region of the 8x16 input block. As in (a) of Figure 14d, this is because non-separable secondary transform is performed in units of 4x4 or 8x8 regions.

Specifically, a 48x16 non-separable secondary transform matrix may be applied to 48 (primary) transform coefficients in the upper 8x8 region, thereby generating 16 (secondary) transform coefficients. Using a 48x16 matrix is to reduce multiplication complexity in the worst case. In the forward non-separable secondary transform, since a 48x1 or 16x1 vector is used as an input vector, the (primary) transform coefficients in the lower right 4x4 region of the upper 8x8 region are not used as input values of the non-separable secondary transform.

16 output coefficients may be placed in the upper left 4x4 region (hatched region) of the 8x16 output block according to the diagonal scan order. In addition, the remaining region not filled with the output coefficients in the 8x16 output block may be filled with a zero value. At this time, since the lower right 4x4 region of the upper 8x8 region was not used as input values of the non-separable secondary transform, zeroing out for the region is not performed and the (primary) transform coefficients remain as it is.

As described above with reference to FIGS. 14a to 14d, the non-separable secondary transform may be applied only to the upper left region of the input block. In addition, the zero-out region may be limited to a region where (secondary) transform coefficients are not filled in the regions to which the non-separable secondary transform is actually applied.

FIGS. 15a to 15d are views illustrating a non-separable primary transform process according to an embodiment of the present disclosure.

FIGS. 15a to 15d show non-separable primary transform at an encoder stage, that is, a forward non-separable primary transform process.

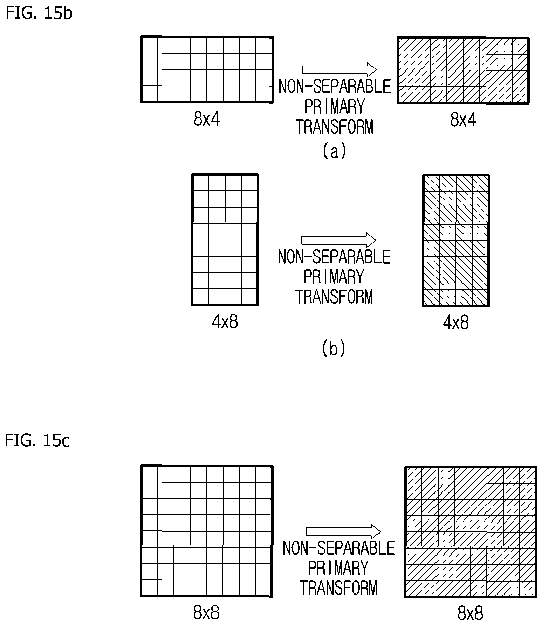

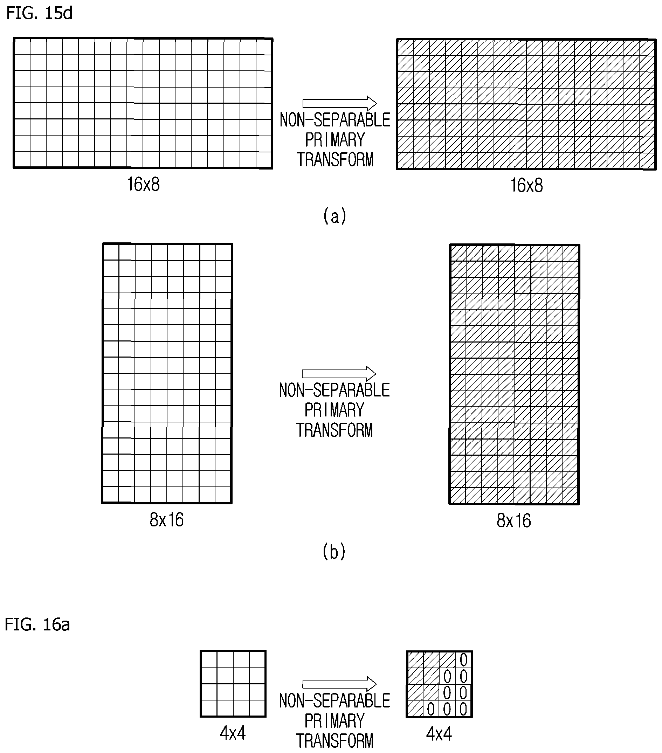

FIG. 15a shows a case where the size of the input block is 4x4, and FIG. 15b shows a case where the size of the input block is 8x4 or 4x8. In addition, FIG. 15c shows a case where the size of the input block is 8x8, and FIG. 15d shows a case where the size of the input block is 16x8 or 8x16.

In FIGS. 15a to 15d, the region indicated by a thick line represents a region to which the non-separable primary transform is applied.

First, referring to FIG. 15a, non-separable primary transform may be applied to the entire 4x4 input block. Specifically, a 16x16 non-separable primary transform matrix may be applied to 16 residual samples of the 4x4 input block, thereby generating 16 (primary) transform coefficients.

Next, referring to (a) of FIG. 15b, non-separable primary transform may be applied to the entire 8x4 input block. Specifically, a 32x32 non-separable primary transform matrix may be applied to 32 residual samples of the 8x4 input block, thereby generating 32 (primary) transform coefficients. In addition, referring to (b) of FIG. 15b, non-separable primary transform may be applied to the entire 4x8 input block. Specifically, a 32x32 non-separable primary transform matrix may be applied to 32 residual samples of the 4x8 input block, thereby generating 32 (primary) transform coefficients.

Next, referring to FIG. 15c, non-separable primary transform may be applied to the entire 8x8 input block. Specifically, a 64x64 non-separable primary transform matrix may be applied to 64 residual samples of the 8x8 input block, thereby generating 64 (primary) transform coefficients.

Next, referring to (a) of FIG. 15d, non-separable primary transform may be applied to the entire 16x8 input block. Specifically, a 128x128 non-separable primary transform matrix may be applied to 128 residual samples of the 16x8 input block, thereby generating 128 (primary) transform coefficients. In addition, referring to (b) of FIG. 15d, non-separable primary transform may be applied to the entire 8x16 input block. Specifically, a 128x128 non-separable primary transform matrix may be applied to 128 residual samples of the 8x16 input block, thereby generating 128 (primary) transform coefficients.

As such, the non-separable primary transform according to embodiments of the present disclosure may be applied to the entire region of the input block. In addition, since all residual samples in the input block are (primary) transformed by non-separable primary transform, zeroing out is not performed. In this respect, non-separable primary transform has different characteristics from non-separable secondary transform.

Meanwhile, FIGS. 15a to 15d show a case where the number of input samples and the number of output coefficients of the non-separable primary transform are the same. However, in some embodiments, non-separable primary transform in the form of a reduced transform (RT) in which the number of output coefficients of the non-separable primary transform is smaller than the number of input samples may be applied.

FIGS. 16a to 16d are views illustrating a non-separable primary transform process according to another embodiment of the present disclosure. The non-separable primary transform of FIGS. 16a to 16d is the same as that of FIGS. 15a to 15d in that the non-separable primary transform is applied to the entire input block. Hereinafter, redundant explanations will be omitted and differences between the two will be focused upon.

First, referring to FIG. 16a, a 16x8 non-separable primary transform matrix may be applied to 16 residual samples of a 4x4 input block, thereby generating 8 (primary) transform coefficients. As a non-separable primary transform result (in the forward direction), in that the number of output coefficients is reduced compared to the number of input samples, such non-separable primary transform may be called RPT (reduced primary transform) or RCT (reduced core transform).

8 output coefficients may be placed in the upper left region (hatched region) of the 4x4 output block according to the diagonal scan order. In addition, the entire remaining region not filled with the output coefficients in the 4x4 output block may be filled with a zero value (i.e., zero out). Accordingly, all residual sample values may be modified.

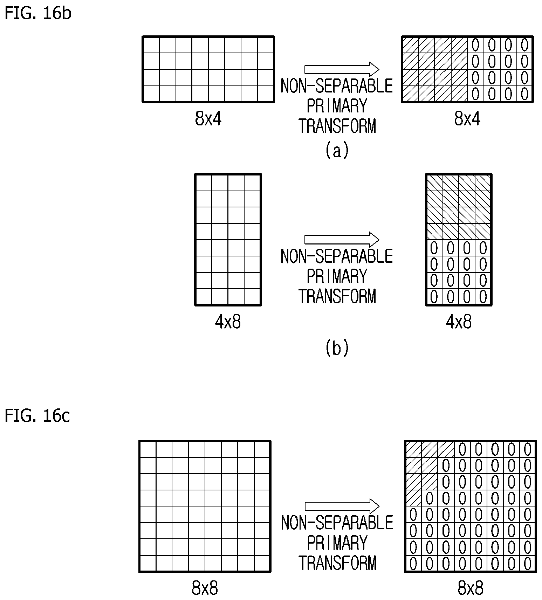

Next, referring to (a) of FIG. 16b, a 32x16 non-separable primary transform matrix may be applied to 32 residual samples of the 8x4 input block, thereby generating 16 (primary) transform coefficients. The 16 output coefficients may be placed in the left 4x4 region (hatched region) of the 8x4 output block according to the diagonal scan order. In addition, the entire remaining region not filled with the output coefficients in the 8x8 output block may be filled with a zero value. Accordingly, all residual sample values may be modified.

Referring to (b) of FIG. 16b, a 32x16 non-separable primary transform matrix may be applied to 32 residual samples of a 4x8 input block, thereby generating 16 (primary) transform coefficients. The 16 output coefficients may be placed in the upper 4x4 region (hatched region) of the 4x8 output block according to the diagonal scan order. In addition, the entire remaining region not filled with the output coefficients in the 8x8 output block may be filled with a zero value. Accordingly, all residual sample values may be modified.

Referring to FIG. 16c, a 64x8 non-separable primary transform matrix may be applied to 64 residual samples of an 8x8 input block, thereby generating 8 (primary) transform coefficients. The 8 output coefficients may be placed in the upper left region (hatched region) of the 8x8 output block according to the diagonal scan order. In addition, the entire remaining region not filled with the output coefficients in the 8x8 output block may be filled with a zero value. Accordingly, all residual sample values may be modified.

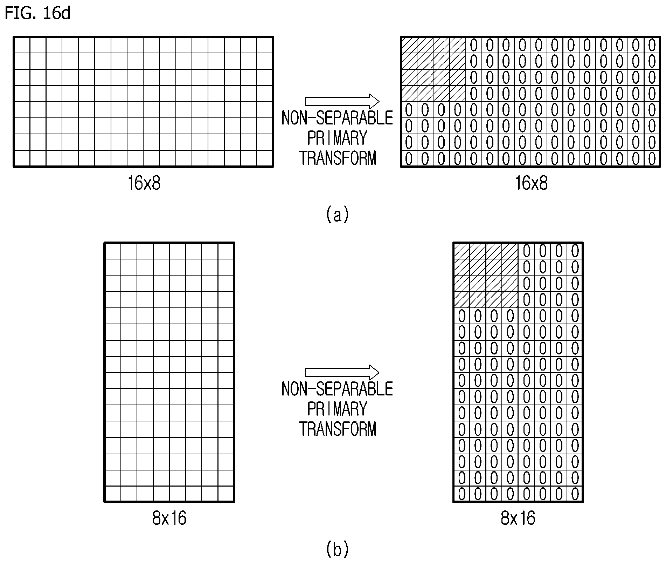

Referring to (a) of FIG. 16d, a 128x16 non-separable secondary transform matrix may be applied to 128 residual samples of a 16x8 input block, thereby generating 16 (primary) transform coefficients. The 16 output coefficients may be placed in the upper left 4x4 region (hatched region) of the 16x8 output block according to the diagonal scan order. In addition, the entire remaining region not filled with the output coefficients in the 16x8 output block may be filled with a zero value. Accordingly, all residual sample values may be modified.

Referring to (b) of FIG. 16d, a 128x16 non-separable secondary transform matrix may be applied to 128 residual samples of an 8x16 input block, thereby generating 16 (primary) transform coefficients. The 16 output coefficients may be placed in the upper left 4x4 region (hatched region) of the 16x8 output block according to the diagonal scan order. In addition, the entire remaining region not filled with the output coefficients in the 16x8 output block may be filled with a zero value. Accordingly, all residual sample values may be modified.

As such, the non-separable primary transform according to embodiments of the present disclosure may be applied to the entire region of the input block. In addition, zeroing out may be performed on the entire remaining region not filled with (primary) transform coefficients in the output block. Accordingly, all input values (i.e., residual sample values) of the non-separable primary transform may be modified. In this respect, non-separable primary transform has different characteristics from non-separable secondary transform.

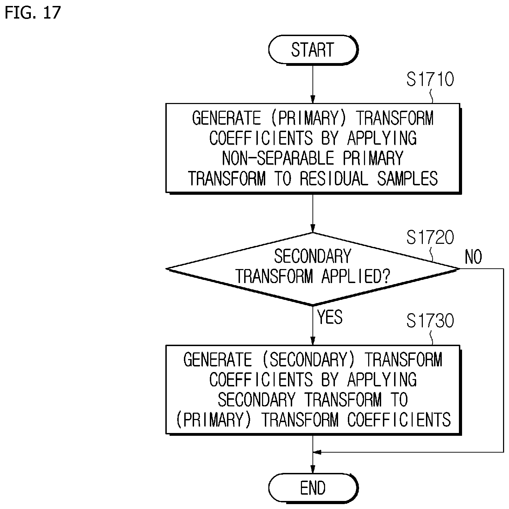

FIG. 17 is a flowchart illustrating a transform method according to an embodiment of the present disclosure.

The transform method of FIG. 17 may be performed by the image encoding apparatus of FIG. 2. For example, steps S1710 to S1730 may be performed by the transform unit 120.

Referring to FIG. 17, the image encoding apparatus may generate (primary) transform coefficients by applying non-separable primary transform to residual samples (S1710). All residual samples in the residual block may be modified by non-separable primary transform. In one embodiment, the non-separable primary transform may have a reduced transform (RT) form in which the number of output coefficients is smaller than the number of input samples. In this case, zeroing out may be performed on all regions in which output coefficients are not generated.

The image encoding apparatus may determine whether to apply secondary transform to the (primary) transform coefficients (S1720). The secondary transform may be non-separable secondary transform, such as NSST or RST. In one embodiment, the image encoding apparatus may determine whether to apply the secondary transform based on the primarytransformed residual transform coefficient. For example, when the number of non-zero residual transform coefficients included in the region to which the secondary transform is applied is greater than or equal to a predetermined threshold, the image encoding apparatus may determine that the secondary transform is applied. On the other hand, if the number of non-zero residual transform coefficients included in the region to which the secondary transform is applied is less than the predetermined threshold, the image encoding apparatus may determine that the secondary transform is not applied. Information regarding whether secondary transform is applied may be encoded as a predetermined syntax element (e.g., sps_lfnst_enabled_flag, lfnst_idx, etc.).

Upon determining that secondary transform is applied ('YES' in S1720), the image encoding apparatus may generate (secondary) transform coefficients by applying secondary transform to the (primary) transform coefficients (S1730). In this case, a bitstream may be generated based on (secondary) transform coefficients.

In contrast, upon determining that the secondary transform is not applied ('NO' in S1720), the image encoding apparatus may not perform secondary transform on the (primary) transform coefficients. In this case, a bitstream may be generated based on the (primary) transform coefficients.

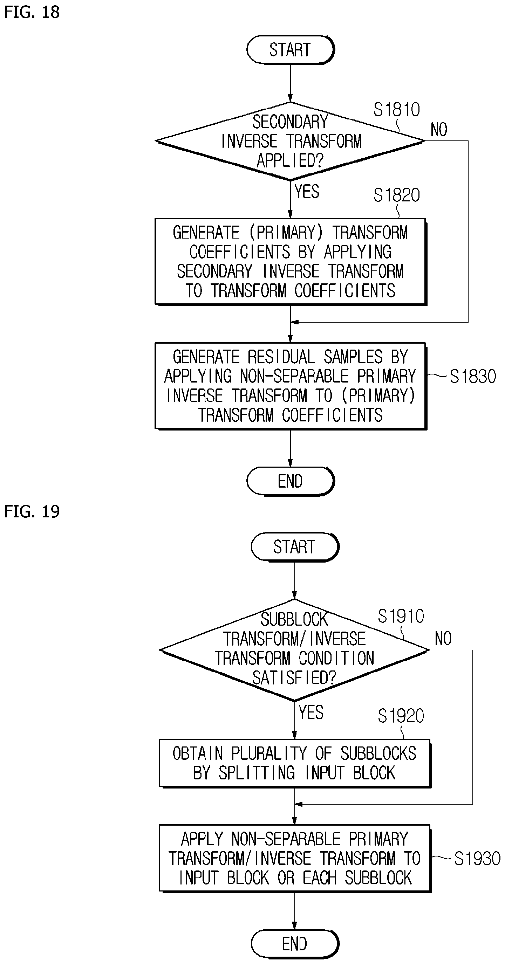

FIG. 18 is a flowchart illustrating an inverse transform method according to an embodiment of the present disclosure.

The inverse transform method of FIG. 18 may be performed by the image encoding apparatus of FIG. 2 or the image decoding apparatus of FIG. 3. For example, steps S1810 to S1830 may be performed by the inverse transform unit 150 of FIG. 2 or the inverse transform unit 230 of FIG. 3. Hereinafter, for convenience of description, the image decoding apparatus will be focused upon.

Referring to FIG. 18, the image decoding apparatus may determine whether to apply secondary inverse transform to the transform coefficients obtained from the bitstream (S1810). The secondary inverse transform may be non-separable secondary inverse transform, such as NSST or RST. In one embodiment, the image decoding apparatus may determine whether to apply secondary inverse transform based on a predetermined syntax element (e.g., sps_lfnst enabled_flag, lfnst_idx, etc.) obtained from the bitstream. For example, when lfnst_idx has a first value (e.g., 0), the image decoding apparatus may determine that the secondary inverse transform is not applied. In contrast, when lfnst_idx has a value different from the first value (e.g., 0), the image decoding apparatus may determine that secondary inverse transform is applied.

Upon determining that the secondary inverse transform is applied ('YES' in S1810), the image decoding apparatus may generate (primary) transform coefficients by applying secondary inverse transform to the transform coefficients obtained from the bitstream (S1820)). In this case, transform coefficients obtained from the bitstream may correspond to (secondary) transform coefficients.

On the other hand, upon determining that the secondary inverse transform is not applied ('NO' in S1810), the image decoding apparatus may not perform secondary inverse transform on the transform coefficients obtained from the bitstream. In this case, transform coefficients obtained from the bitstream may correspond to (primary) transform coefficients.

The image decoding apparatus may generate residual samples by applying non-separable primary inverse transform to the (primary) transform coefficients (S1830). All (primary) transform coefficients may be modified by non-separate primary inverse transform. In one embodiment, the non-separable primary inverse transform may have a reduced transform (RT) form in which the number of output coefficients is greater than the number of input coefficients.

## Subblock based non-separable primary transform

In one embodiment, the block is split into subblocks without applying non-separable primary transform suitable for the width and height of the block to a relatively large input block and then non-separable primary transform may be applied using a non-separable transform matrix suitable for the width and height of each subblock. For example, when applying non-separable primary transform to a 4x8 block, the 4x8 block is horizontally split into two 4x4 subblocks in the spatial domain, and non-separable primary transform in 4x4 block units may be applied to each 4x4 subblock. Alternatively, when applying non-separable primary transform to a 16x8 block, the 16x8 block is vertically split into two 8x8 subblocks in the spatial domain, and non-separable primary transform in 8x8 block units may be applied to each 8x8 subblock.

FIG. 19 is a flowchart illustrating a subblock non-separable primary transform/inverse transform according to an embodiment of the present disclosure.

The transform method of FIG. 19 may be performed by the image encoding apparatus of FIG. 2. For example, steps S1910 to S1930 may be performed by the transform unit 120. In addition, the inverse transform method of FIG. 19 may be performed by the image encoding apparatus of FIG. 2 or the image decoding apparatus of FIG. 3. For example, steps S1910 to S1930 may be performed by the inverse transform unit 150 of FIG. 2 or the inverse transform unit 230 ofFIG. 3.

Referring to FIG. 19, the image encoding/decoding apparatus may determine whether a predetermined subblock transform/inverse transform condition is satisfied (S1910). In one embodiment, the image encoding/decoding apparatus may determine whether the subblock transform/inverse transform condition is satisfied based on a result of comparing the size of the input block with a predetermined threshold. Here, the threshold may include a first threshold of 4x4 size and a second threshold of 8x8 size. Specifically, when the size of the input block is greater than the first threshold and less than the second threshold, the image encoding/decoding apparatus may determine that the subblock transform/inverse transform condition is satisfied. In addition, when the size of the input block is greater than the second threshold, the image encoding/decoding apparatus may determine that the subblock transform/inverse transform condition is satisfied.

If the subblock transform condition is satisfied ('YES' in S1910), the image encoding/decoding apparatus may obtain a plurality of subblocks by splitting the input block (S1920). For example, the image encoding/decoding apparatus may obtain two 4x4 subblocks by vertically splitting an 8x4 block. Alternatively, the image encoding/decoding apparatus obtain two 8x8 subblocks by horizontally splitting an 8x16 block.

In contrast, if the subblock transform condition is not satisfied ('NO' in S1910), the image encoding/decoding apparatus may determine that the input block is not split and proceed to step S1930.

In addition, the image encoding/decoding apparatus may apply non-separable primary transform/inverse transform to the input block or each subblock (S1930). When applying non-separable primary transform/inverse transform to the entire input block, the non-separable transform matrix may be determined based on the width and height of the input block. In contrast, when applying non-separable primary transform/inverse transform to each subblock, the non-separable transform matrix may be determined based on the width and height of each subblock.

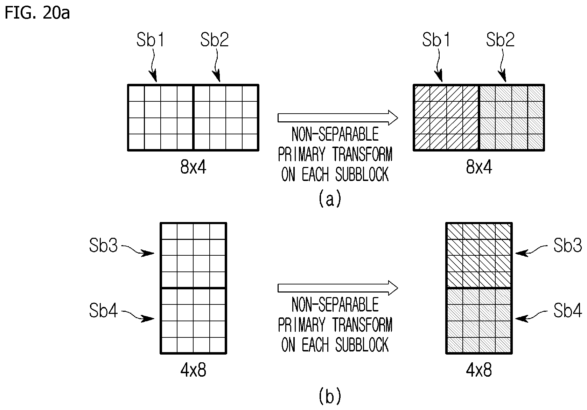

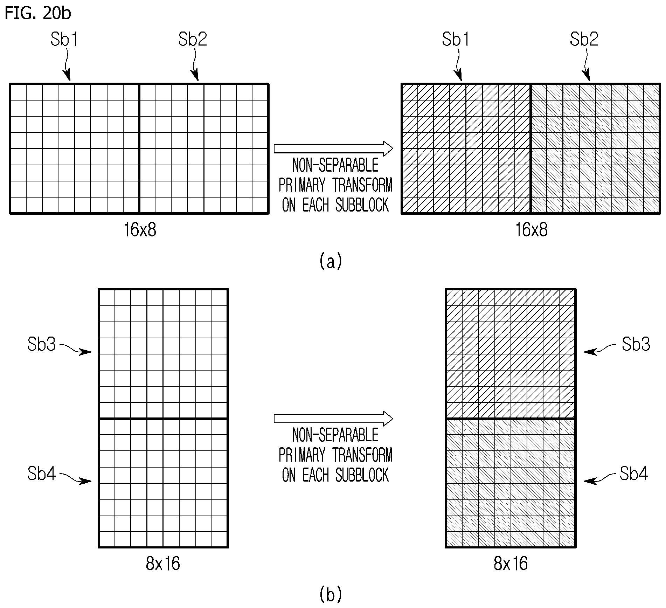

FIGS. 20a and 20b are views illustrating a subblock based non-separable primary transform process.

FIGS. 20a to 20b show non-separable primary transform at an encoder stage, that is, a forward non-separable primary transform process.

FIG. 20a shows a case where the size of an input block is 8x4 or 4x8, and FIG. 20b shows a case where the size of the input block is 16x8 or 8x16.

In FIGS. 20a to 20d, a region indicated by a thick line represents a region to which non-separable primary transform is applied.

First, referring to (a) of FIG. 20a, an 8x4 input block may be split into two 4x4 subblocks Sb1 and Sb2. In addition, 4x4 non-separable primary transform may be applied to each of the subblocks Sb1 and Sb2. Specifically, a 16x16 non-separable primary transform matrix may be applied to the first subblock Sb1 to generate 16 (primary) transform coefficients. In addition, a 16x16 non-separable primary transform matrix may be applied to the second subblock Sb2 to generate 16 (primary) transform coefficients.

Referring to (b) of FIG. 20a, a 4x8 input block may be split into two 4x4 subblocks Sb3 and Sb4. In addition, 4x4 non-separable primary transform may be applied to each of the subblocks Sb3 and Sb4. Specifically, a 16x16 non-separable primary transform matrix may be applied to the third subblock Sb3 to generate 16 (primary) transform coefficients. In addition, a 16x16 non-separable primary transform matrix may be applied to the fourth subblock Sb4 to generate 16 (primary) transform coefficients.

Next, referring to (a) of FIG. 20b, a 16x8 input block may be split into two 8x8 subblocks Sb1 and Sb2. In addition, 8x8 non-separable primary transform may be applied to each of subblock Sb1 and Sb2. Specifically, a 64x64 non-separable primary transform matrix may be applied to the first subblock Sb1 to generate 64 (primary) transform coefficients. In addition, a 64x64 non-separable primary transform matrix may be applied to the second subblock Sb2 to generate 64 (primary) transform coefficients.

Referring to (b) of FIG. 20b, an 8x16 input block may be split into two 8x8 subblocks Sb3 and Sb4. In addition, 8x8 non-separable primary transform may be applied to each of the subblock Sb3 and Sb4. Specifically, a 64x64 non-separable primary transform matrix may be applied to the third subblock Sb3 to generate 16 (primary) transform coefficients. In addition, a 64x64 non-separable primary transform matrix may be applied to the fourth subblock Sb4 to generate 16 (primary) transform coefficients.

Meanwhile, in some embodiments, a different non-separable primary transform matrix may be applied to each subblock. For example, in FIG. 2a, a 16x16 non-separable primary transform matrix may be applied to the first subblock Sb1, and a 16x8 non-separable primary transform matrix may be applied to the second subblock Sb2. In this case, a region where (primary) transform coefficients are not generated in the second subblock Sb2 may be filled with a zero value (i.e., zero out).

**Non-separable primary transform** set **and kernel determination method**

According to embodiments of the present disclosure, the non-separable primary transform set and/or kernel may be variously configured based on at least one of a prediction mode (e.g., intra prediction mode, inter prediction mode, etc.), a width/height of an input block, the number of pixels of the input block, the location of a subblock in the input block, an explicitly signaled syntax element, statistical characteristics of neighboring pixels, whether secondary transform is applied, or a quantization parameter (QP).

In one embodiment, when the prediction mode of a current block is an intra prediction mode, intra prediction modes may be grouped into n sets, and k transform kernels may be configured to be included in each set. At this time, the number and grouping method of intra prediction modes may vary depending on the embodiment.

Hereinafter, a method of determining a non-separable primary transform set based on an intra prediction mode according to an embodiment of the present disclosure will be described in detail.

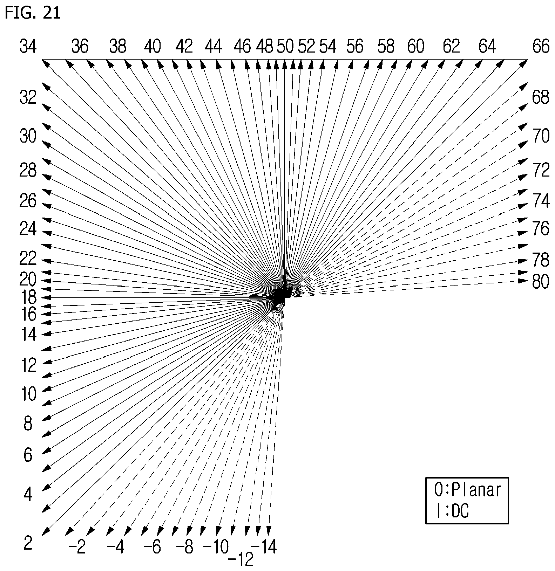

FIGS. 21 to 24 are views illustrating a non-separable primary transform set determination method according to an embodiment of the present disclosure.

The intra prediction mode may include two non-directional intra prediction modes and 65 directional intra prediction modes. The non-directional intra prediction modes may include planar intra prediction mode of #0 and DC intra prediction mode of #1, and the directional intra prediction modes may include 65 intra prediction modes of # 2 to #66. However, this is an example and the embodiments of the present disclosure are not limited thereto.

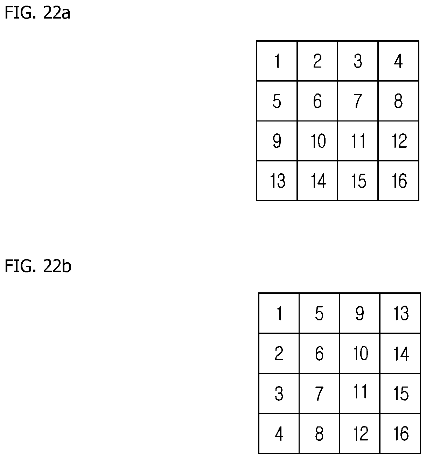

As wide angle intra prediction (WAIP) is applied, directional intra prediction modes may further include intra prediction modes of #-14 to #1 and intra prediction modes of #67 to #80. FIG. 22 exemplarily shows intra prediction modes and prediction directions extended by considering WAIP.

Referring to FIG. 21, modes of #-14 to # -1 and #2 to #33 and modes of #35 to #80 are symmetrical in terms of prediction direction with respect to #34 mode. For example, modes of #10 and #58 are symmetrical with respect to the direction corresponding to #34 mode, and #-1 mode is symmetrical with # 67 mode. Accordingly, according to an embodiment of the present disclosure, when constructing a transform set for primary transform, the vertical mode symmetrical with #34 mode may be used by transposing the input data. Here, transposing the input data may mean that rows become columns and columns become rows for two-dimensional block data MxN, forming NxM data.

In one example, when a 4x4 block is used as input data, a 16x1 vector may be constructed by appropriately arranging the 16 data constituting a 4x4 region for non-separable primary transform, and the 16x1 vector may be constructed in row-first order as shown in FIG. 22a. This may refer to the order when two-dimensional data is arranged in one dimension for forward non-separable primary transform. In addition, this may mean the order when transform coefficients generated by backward non-separable primary transform are arranged in two dimensions.

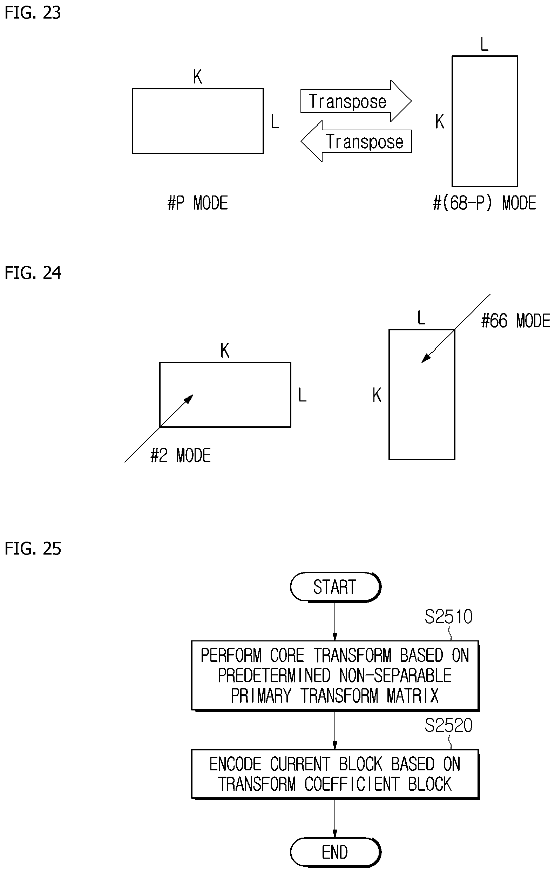

Meanwhile, as described above, the directional modes of #-14 to #-1 and #2 to #80 are symmetrically configured with respect to #34 mode. Therefore, if the data arrangement order for constructing the 16x1 input vector for #-14 to #-1 modes and #2 to #33 modes is a column-first order, the input vector may be constructed in the order shown in FIG. 22b for #35 to #80 modes. The data arrangement order in FIG. 23b is a column-first order. This may refer to the order when two-dimensional data is arranged in one dimension for forward non-separable primary transform. In addition, this may mean the order when transform coefficients generated by backward non-separable primary transform are arranged in two dimensions.

Meanwhile, strictly speaking, #34 mode may be considered to be neither horizontal directionality nor vertical directionality, but is classified as belonging to horizontal directionality from the perspective of the data arrangement method of the present disclosure. That is, for #-14 to #-1 and #2 to #33 modes, the input data sorting method for the horizontal mode, that is, row-first sorting, is used, and for the vertical mode that is symmetrical with respect to #34 mode, the input data may be transposed and used.

Meanwhile, in the case of a non-square block, symmetry in the forward block (i.e., symmetry between #P mode and #68-P mode (2≤P≤33) in an NxN block, or symmetry between #Q mode and #66-Q mode (-14≤Q≤-1) may not be utilized. Therefore, according to another embodiment of the present disclosure, instead of utilizing symmetry based only on the intra prediction mode described above, symmetry between block shapes in a transpose relationship with each other, that is, symmetry between KxL blocks and LxK blocks, may be utilized together with the intra prediction mode.

Specifically, referring to FIG. 23, a symmetrical relationship may exist between the KxL block predicted in #P mode and the LxK block predicted in #68-P mode (2<=P<=33). In addition, a symmetrical relationship may exist between the KxL block predicted in #Q mode and the LxK block predicted in #66-Q mode (-14<=Q<=-1).

For example, as shown in FIG. 24, the KxL block with #2 mode and the LxK block with #66 mode may be regarded as symmetrical to each other, and as a result, the same transform kernel may be applied to both blocks. If the transform set for the intra prediction mode is mapped based on the KxL block (i.e., if there is a table regarding which transform set is applied to each prediction mode), in order to apply the transform to the LxK block, the transform set may be obtained through a KxL block-based mapping table with #68-P mode (2<=P<=33) instead of #P mode applied to the LxK block (or with #66-Q mode (-14<=Q<=-1) instead of #Q mode applied to the LxK block). Accordingly, in the example of FIG. 25, in order to apply transform to the LxK block, a transform set may be selected based on #2 mode instead of #66 mode. In addition, for the KxL block, input data may be scanned in a predetermined order (e.g., row-first order, column-first order) to construct a one-dimensional vector, and then forward non-separable primary transform may be applied. In addition, for the LxK block, the input data may be scanned according to the transpose order (i.e., it is scanned in the column-first order if it is scanned in the row-first order for the KxL block, and it is scanned in the row-first order if it is scanned in the column-first order for the KxL block) to construct a one-dimensional vector and then forward non-separable primary transform may be applied.

Meanwhile, since the intra prediction modes in FIG. 21 are exemplary, even when the intra prediction modes are set in a different way, non-separable primary transform may be applied based on the symmetry between the above-described intra prediction modes and/or block shapes. In addition, in the case of #34 mode, when applied to the KxL block, the transform set may be determined using #34 mode based on the KxL block, and the input data may be scanned in a predetermined order to construct a one-dimensional vector, and then the corresponding non-separable primary transform may be applied. Likewise, when applied to the LxK block, the transform set may be determined using #34 mode, the input data may be scanned in transpose order to construct a one-dimensional vector, and then the corresponding non-separable primary transform may be applied.

Although a method of deriving a transform set and constructing input data through an intra prediction mode based on a KxL block has been described above, it is also possible to construct input data based on an LxK block, and in this case, for the KxL block, the corresponding non-separable primary transform may be applied by equally utilizing the above-described symmetry. In addition, when it is based on the KxL block, it may be constructed to always satisfy the relationship of K > L. In addition, when applying backward non-separable primary transform, the transform set may be determined by equally utilizing the symmetry between the KxL block and the LxK block described above, and the one-dimensional output data derived through backward transform may be placed in a two-dimensional block. Meanwhile, in the case of a non-square block, a different number of transform sets may be used than in the case of a square block without utilizing symmetry, and the transform sets may be selected using a different mapping table than in the case of the square block.

Specific examples of the mapping table for transform set selection are shown in Table 12 to 14.

[Table 12]

| predModeIntra | TrSetIdx |
|---|---|
| predModeIntra < 0 | 4 |
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |
| 67 <= predModeIntra <= 80 | 4 |

Table 12 exemplarily shows a method of allocating each transform set to an intra prediction mode when there are five transform sets. In Table 12, the predModeIntra value means an intra prediction mode value changed by considering WAIP, and TrSetIdx means an index value indicating a specific non-separable primary transform set.

Referring to Table 12, it can be seen that the same non-separable primary transform set is applied to modes located in symmetrical directions according to the intra prediction mode. Meanwhile, since the mapping table in Table 12 using five transform sets is only an example, embodiments of the present disclosure are not limited thereto. For example, unlike Table 12, a mapping table may be constructed using six or more transform sets.

As another example in Table 12, to improve compression performance, the mapping table may be constructed so that non-separable primary transform is not applied to WAIP (as in Table 13) or a separate transform set is not constructed for WAIP and a transform set mapped to an adjacent intra prediction mode is equally used for WAIP (as in Table 14).

[Table 13]

| predModeIntra | TrSetIdx |
|---|---|
| 0 <= predModeIntra <= 1 | 0 |
| 2 <= predModeIntra <= 12 | 1 |
| 13 <= predModeIntra <= 23 | 2 |
| 24 <= predModeIntra <= 44 | 3 |
| 45 <= predModeIntra <= 55 | 2 |
| 56 <= predModeIntra <= 66 | 1 |

[Table 14]

| predModeIntra | TrSetIdx |
|---|---|
| predModeIntra < 0 | 1 |
| 0 <= predModeIntra <= 1 | 0 |

(continued)

| predModeIntra | TrSetIdx |
|---|---|
| 2 <= predModeIntra <= 12 | 1 |
| 13 **<=** predModeIntra <= 23 | 2 |
| 24 <= predModeIntra <= 44 | 3 |
| 45 <= predModeIntra <= 55 | 2 |
| 56 <= predModeIntra <= 80 | 1 |

Meanwhile, in one embodiment, the number of transform sets for non-separable primary transform and the number of transform kernels within each set may be determined differently based on the width and/or height of the (input) block. For example, for a 4x4 block, $n_1$ transform sets and $k_1$ transform kernels in each set may be configured. In contrast, for a 4x8 block, $n_2$ transform sets and $k_2$ transform kernels in each set may be configured.

In one embodiment, the number of transform sets for non-separable primary transform and the number of transform kernels in each set may be determined differently based on a product of the width and height of the (input) block. For example, if the product of the width and height of the (input) block is equal to or greater than (or exceeds) 256, $n_3$ transform sets and $k_3$ transform kernels in each set may be configured. In addition, in other cases, $n_4$ transform sets and $k_4$ transform kernels in each set may be configured.

In one embodiment, the number of transform sets for non-separable primary transform and the number of transform kernels within each set may be determined differently depending on the location of each subblock included in a current transform block. For example, if a 4x8 or 8x4 block is split into two 4x4 subblocks and non-separable primary transform is applied to each subblock, $n_5$ transform sets and $k_5$ transform kernels in each set may be configured for the non-separable primary transform to be applied to the upper left 4x4 subblock. In contrast, for the non-separable primary transform to be applied to the remaining 4x4 subblocks, $n_6$ transform sets and $k_6$ transform kernels in each set may be configured.

In one embodiment, a predetermined syntax element representing information about non-separable primary transform may be explicitly signaled. For example, if three types of non-separable primary transform configurations are supported (e.g., $n_7$ transform sets and $k_7$ transform kernels in each set, $n_8$ transform sets and $k_8$ transform kernels in each set, $n_9$ transform sets and $k_9$ transform kernels in each set), the syntax element may have any one of the values 0, 1, or 2. At this time, syntax elements with different values may represent different non-separable primary transform configurations.

In one embodiment, the configuration of the non-separable primary transform may be determined differently based on whether secondary transform/inverse transform is applied and/or the type of the secondary transform/inverse transform. For example, when secondary transform is not applied, $n_{10}$ transform sets and $k_{10}$ transform kernels in each set may be configured for non-separable primary transform. In contrast, when secondary transform is applied, $n_{11}$ transform sets and $k_{11}$ transform kernels in each set may be configured.

In one embodiment, the configuration of the non-separable primary transform may be determined differently based on the quantization parameter (QP) value and/or the range of QP values. For example, dividing into a case where the QP value is relatively small and a case where the QP value is relatively large, a first configuration including $n_{12}$ transform sets and $k_{12}$ transform kernels in each set, and a second configuration including $n_{13}$ transform sets and $k_{13}$ transform kernels in each set may be applied. At this time, determination of the magnitude of the QP value may be performed based on a predetermined threshold (e.g., 32). For example, if the QP value is equal to or less than (or less than) 32, the QP value may be classified as relatively small. In contrast, if the QP value exceeds (or is equal to or greater than) 32, the QP value may be classified as relatively large. In some embodiments, it is possible to divide the range of QP values into three or more ranges and apply different configurations to each range.

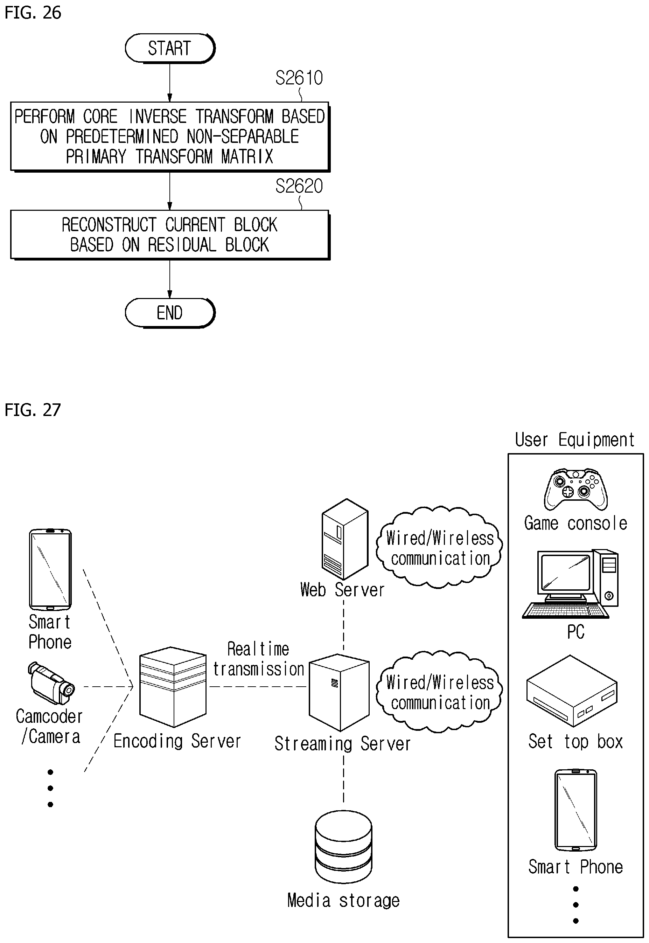

Hereinafter, an image encoding/decoding method according to an embodiment of the present disclosure will be described in detail with reference to FIGS. 25 and 26.

FIG. 25 is a flowchart illustrating an image encoding method according to an embodiment of the present disclosure.

The image encoding method of FIG. 25 may be performed by the image encoding apparatus of FIG. 2. For example, steps S2510 and S2520 may be performed by the transform unit 120.

Referring to FIG. 25, the image encoding apparatus may perform transform on a current block based on a predetermined non-separable primary transform matrix to generate a transform coefficient block of the current block (S2510).

In one embodiment, the transform may be performed based on multiple transform selection (MTS).

In one embodiment, zeroing out of the transform coefficient block may be selectively performed based on the size of the non-separable primary transform matrix. For example, based on the non-separable primary transform matrix having a square size, the zeroing out may not be performed. In contrast, based on the non-separable primary transform matrix having a non-square size, the zeroing out may be performed on at least one residual sample within the residual block.

In one embodiment, the non-separable primary transform matrix may be determined from predetermined non-separable transform sets. In this case, the non-separable transform sets may be configured differently based on at least one of a prediction mode of the current block, a size, the number of pixels, transform set configuration information, whether secondary transform is performed, or a quantization parameter.

In one embodiment, transform may be performed based on the subblock. Specifically, the image encoding apparatus may determine whether the current block satisfies a predetermined subblock transform condition, and obtain a plurality of subblocks by splitting the current block based on the subblock transform condition being satisfied. The image encoding apparatus may perform the transform on each of the plurality of subblocks.

In addition, the image encoding apparatus may encode the current block based on the transform coefficient block (S2520).

In one embodiment, the non-separable primary transform matrix may be applied to all residual samples of the current block regardless of the size of the current block.

FIG. 26 is a flowchart illustrating an image decoding method according to an embodiment of the present disclosure.

The image decoding method of FIG. 26 may be performed by the image decoding apparatus of FIG. 3. For example, steps S2610 and S2620 may be performed by the inverse transform unit 230 of FIG. 3.

Referring to FIG. 26, the image decoding apparatus may perform inverse transform on a current block based on a predetermined non-separable primary transform matrix to generate a residual block of the current block (S2610).

In one embodiment, the inverse transform may be performed based on multiple transform selection (MTS).

In one embodiment, zeroing out of the transform coefficient block may be selectively performed based on the size of the non-separable primary transform matrix. For example, based on the non-separable primary transform matrix having a square size, the zeroing out may not be performed. In contrast, based on the non-separable primary transform matrix having a non-square size, the zeroing out may be performed on at least one residual sample within the residual block.

In one embodiment, the non-separable primary transform matrix may be determined from predetermined non-separable transform sets. In this case, the non-separable transform sets may be configured differently based on at least one of a prediction mode of the current block, a size, the number of pixels, transform set configuration information, whether secondary transform is performed, or a quantization parameter.

In one embodiment, the transform may be performed based on the subblock. Specifically, the image encoding apparatus may determine whether the current block satisfies a predetermined subblock transform condition, and obtain a plurality of subblocks by splitting the current block based on the subblock transform condition being satisfied. The image encoding apparatus may perform the transform on each of the plurality of subblocks. At this time, the subblock inverse transform condition may include a first condition regarding whether the size of the current block is greater than a first threshold, and a second condition regarding whether the size of the current block is greater than a second threshold.

In one embodiment, the non-separable primary transform matrix may be determined to be the same as the transform matrix for the first block that has symmetry with the current block in at least one of intra prediction mode or block shape.

In addition, the image decoding apparatus may reconstruct the current block based on the residual block.

In one embodiment, the non-separable primary transform matrix may be applied to all residual samples of the current block regardless of the size of the current block.

As described above, according to the embodiments of the present disclosure, non-separable transform in which horizontal transform and vertical transform are not separated may be used as primary transform. Accordingly, transform/inverse transform efficiency can be further improved. Non-separate primary transform may be applied to the entire input block and the values of all samples/coefficients of the input block may be changed. In some embodiments, the non-separable primary transform may have a reduced transform (RT) form. A transform set mapping table for non-separable primary transform may be constructed based on the symmetry of the intra prediction mode. In this case, the transform set used for the non-separable primary transform may be selected from the mapping table based on the symmetry of the intra prediction mode and/or the symmetry between block shapes.

While the exemplary methods of the present disclosure described above are represented as a series of operations for clarity of description, it is not intended to limit the order in which the steps are performed, and the steps may be performed simultaneously or in different order as necessary. In order to implement the method according to the present disclosure, the described steps may further include other steps, may include remaining steps except for some of the steps, or may include other additional steps except for some steps.

In the present disclosure, the image encoding apparatus or the image decoding apparatus that performs a predetermined operation (step) may perform an operation (step) of confirming an execution condition or situation of the corresponding operation (step). For example, if it is described that predetermined operation is performed when a predetermined condition is satisfied, the image encoding apparatus or the image decoding apparatus may perform the predetermined operation after determining whether the predetermined condition is satisfied.

The various embodiments of the present disclosure are not a list of all possible combinations and are intended to describe representative aspects of the present disclosure, and the matters described in the various embodiments may be applied independently or in combination of two or more.

Various embodiments of the present disclosure may be implemented in hardware, firmware, software, or a combination thereof. In the case of implementing the present disclosure by hardware, the present disclosure can be implemented with application specific integrated circuits (ASICs), Digital signal processors (DSPs), digital signal processing devices (DSPDs), programmable logic devices (PLDs), field programmable gate arrays (FPGAs), general processors, controllers, microcontrollers, microprocessors, etc.

In addition, the image decoding apparatus and the image encoding apparatus, to which the embodiments of the present disclosure are applied, may be included in a multimedia broadcasting transmission and reception device, a mobile communication terminal, a home cinema video device, a digital cinema video device, a surveillance camera, a video chat device, a real time communication device such as video communication, a mobile streaming device, a storage medium, a camcorder, a video on demand (VoD) service providing device, an OTT video (over the top video) device, an Internet streaming service providing device, a three-dimensional (3D) video device, a video telephony video device, a medical video device, and the like, and may be used to process video signals or data signals. For example, the OTT video devices may include a game console, a blu-ray player, an Internet access TV, a home theater system, a smartphone, a tablet PC, a digital video recorder (DVR), or the like.

FIG. 27 is a view illustrating a content streaming system, to which an embodiment of the present disclosure is applicable.

As shown in FIG. 27, the content streaming system, to which the embodiment of the present disclosure is applied, may largely include an encoding server, a streaming server, a web server, a media storage, a user device, and a multimedia input device.

The encoding server compresses content input from multimedia input devices such as a smartphone, a camera, a camcorder, etc. into digital data to generate a bitstream and transmits the bitstream to the streaming server. As another example, when the multimedia input devices such as smartphones, cameras, camcorders, etc. directly generate a bitstream, the encoding server may be omitted.

The bitstream may be generated by an image encoding method or an image encoding apparatus, to which the embodiment of the present disclosure is applied, and the streaming server may temporarily store the bitstream in the process of transmitting or receiving the bitstream.

The streaming server transmits the multimedia data to the user device based on a user's request through the web server, and the web server serves as a medium for informing the user of a service. When the user requests a desired service from the web server, the web server may deliver it to a streaming server, and the streaming server may transmit multimedia data to the user. In this case, the content streaming system may include a separate control server. In this case, the control server serves to control a command/response between devices in the content streaming system.

The streaming server may receive content from a media storage and/or an encoding server. For example, when the content is received from the encoding server, the content may be received in real time. In this case, in order to provide a smooth streaming service, the streaming server may store the bitstream for a predetermined time.

Examples of the user device may include a mobile phone, a smartphone, a laptop computer, a digital broadcasting terminal, a personal digital assistant (PDA), a portable multimedia player (PMP), navigation, a slate PC, tablet PCs, ultrabooks, wearable devices (e.g., smartwatches, smart glasses, head mounted displays), digital TVs, desktops computer, digital signage, and the like.

Each server in the content streaming system may be operated as a distributed server, in which case data received from each server may be distributed.

The scope of the disclosure includes software or machine-executable commands (e.g., an operating system, an application, firmware, a program, etc.) for enabling operations according to the methods of various embodiments to be executed on an apparatus or a computer, a non-transitory computer-readable medium having such software or commands stored thereon and executable on the apparatus or the computer.

**Industrial Applicability**

The embodiments of the present disclosure may be used to encode or decode an image.

**Claims**

1.  An image decoding method performed by an image decoding apparatus, the image decoding method comprising:

    generating a residual block of a current block by performing inverse transform on the current block based on a predetermined non-separable primary transform matrix; and
    reconstructing the current block based on the residual block,
    wherein the non-separable primary transform matrix is applied to all transform coefficients of the current block regardless of a size of the current block.

2.  The image decoding method of claim 1, wherein the inverse transform is performed based on multiple transform selection (MTS).

3.  The image decoding method of claim 1, wherein zeroing out is selectively performed on the residual block based on a size of the non-separable primary transform matrix.

4.  The image decoding method of claim 1,

    wherein the zeroing out is not performed based on the non-separable primary transform matrix has a square size, and
    wherein the zeroing out is performed on at least one residual sample in the residual block based on the non-separable primary transform matrix has a non-square size.

5.  The image decoding method of claim 1,

    wherein the non-separable primary transform matrix is determined from predetermined non-separable transform sets, and
    wherein the non-separable transform sets are configured differently based on at least one of a prediction mode of the current block, a size, the number of pixels, transform set configuration information, whether secondary inverse transform is performed or a quantization parameter.

6.  The image decoding method of claim 1, further comprising:

    determining whether the current block satisfies a predetermined subblock inverse transform condition;
    obtaining a plurality of subblocks by splitting the current block based on the subblock inverse transform condition being satisfied; and
    performing the inverse transform on each of the plurality of subblocks.

7.  The image decoding method of claim 6, wherein the subblock inverse transform condition comprises a first condition regarding whether the size of the current block is greater than a first threshold and a second condition regarding whether the size of the current block is greater than a second threshold.

8.  The image decoding method of claim 1, wherein the non-separable primary transform matrix is equal to a transform matrix for a first block having symmetry with the current block in at least one of an intra prediction mode or a block shape.

9.  An image decoding g apparatus comprising a memory and at least one processor,
    wherein the at least one processor is configured to:

    generate a residual block of a current block by performing inverse transform on the current block based on a predetermined non-separable primary transform matrix, and
    reconstruct the current block based on the residual block, and
    wherein the non-separable primary transform matrix is applied to all transform coefficients of the current block regardless of a size of the current block.

10. An image encoding method performed by an image encoding apparatus, the image encoding method comprising:

    generating a transform coefficient block of a current block by performing transform on the current block based on a predetermined non-separable primary transform matrix; and
encoding the current block based on the transform coefficient block,
wherein the non-separable primary transform matrix is applied to all residual samples of the current block regardless of a size of the current block.

**11.** The image encoding method of claim 10, wherein the transform is performed based on multiple transform selection (MTS).

**12.** The image encoding method of claim 10, wherein zeroing out is selectively performed on the transform coefficient block based on a size of the non-separable primary transform matrix.

**13.** The image encoding method of claim 10,

wherein the non-separable primary transform matrix is determined from predetermined non-separable transform sets, and
wherein the non-separable transform sets are configured differently based on at least one of a prediction mode of the current block, a size, the number of pixels, transform set configuration information, whether secondary inverse transform is performed or a quantization parameter.

**14.** The image encoding method of claim 10, further comprising:

determining whether the current block satisfies a predetermined subblock inverse transform condition;
obtaining a plurality of subblocks by splitting the current block based on the subblock inverse transform condition being satisfied; and
performing the transform on each of the plurality of subblocks.

**15.** A computer-readable recording medium for storing a bitstream generated by an image encoding method, the image encoding method comprising:

generating a transform coefficient block of a current block by performing transform on the current block based on a predetermined non-separable primary transform matrix; and
encoding the current block based on the transform coefficient block,
wherein the non-separable primary transform matrix is applied to all residual samples of the current block regardless of a size of the current block.

FIG. 1

FIG. 2

FIG. 3

FIG. 4

16 input coefficients for 4x4 forward LFNST
64 input coefficients for 8x8 forward LFNST

Forward low-frequency
non-separable transform

411

Forward
Primary
Transform

413

Quantization

bitstream

Inverse
Primary
Transform

423

De-
Quantization

421

Inverse low-frequency
non-separable transform

8 input coefficients for 4x4 inverse LFNST
16 input coefficients for 8x8 inverse LFNST

FIG. 5

```
          ( START )
              |
              |                    S510
              v
  ┌─────────────────────────────┐
  │  DETERMINE TRANSFORM GROUP   │
  │ CORRESPONDING TO CURRENT BLOCK│
  └─────────────────────────────┘
              |
              |                    S520
              v
  ┌─────────────────────────────┐
  │ PERFORM TRANSFORM ON CANDIDATE│
  │ TRANSFORM COMBINATIONS AVAILABLE│
  │     WITHIN TRANSFORM GROUP    │
  └─────────────────────────────┘
              |
              |                    S530
              v
  ┌─────────────────────────────┐
  │  SELECT TRANSFORM COMBINATION │
  │       WITH LOWEST RD COST     │
  └─────────────────────────────┘
              |
              |                    S540
              v
  ┌─────────────────────────────┐
  │  ENCODE INDEX CORRESPONDING TO│
  │ SELECTED TRANSFORM COMBINATION│
  └─────────────────────────────┘
              |
              v
           ( END )
```

FIG. 6

```
        ┌─────────────┐
        │    START    │
        └──────┬──────┘
               │                        S610
        ┌──────▼─────────────────┐
        │  DETERMINE TRANSFORM   │
        │  GROUP FOR CURRENT BLOCK│
        └──────┬─────────────────┘
               │                        S620
        ┌──────▼─────────────────┐
        │ PARSE TRANSFORM COMBINATION │
        │  INDEX IN TRANSFORM GROUP   │
        └──────┬─────────────────┘
               │                        S630
        ┌──────▼─────────────────┐
        │ DERIVE TRANSFORM COMBINATION│
        │  CORRESPONDING TO TRANSFORM │
        │      COMBINATION INDEX      │
        └──────┬─────────────────┘
               │                        S640
        ┌──────▼─────────────────┐
        │  PERFORM INVERSE TRANSFORM  │
        │  ON CURRENT BLOCK BASED ON  │
        │    TRANSFORM COMBINATION    │
        └──────┬─────────────────┘
               │
        ┌──────▼──────┐
        │     END     │
        └─────────────┘
```

FIG. 7

```
                               S710
          ┌────────────────────────┐
    NO    │        CBF==1?         │
   ◄──────┤                        │
          └───────────┬────────────┘
                      │ YES          S720
          ┌───────────▼────────────┐
          │ ENCODE TRANSFORM COEFFICIENT │
          └───────────┬────────────┘
                      │              S730
          ┌───────────▼────────────┐
    NO    │      NSST INDEX        │
   ◄──────┤   CODING APPLIED?      │
          └───────────┬────────────┘
                      │ YES          S740
          ┌───────────▼────────────┐
          │    ENCODE NSST INDEX   │
          └───────────┬────────────┘
                      │
                      ▼
```

FIG. 8

```
                                               S810
          ┌──────────────────────────┐
    NO    │          CBF==1?          │
  ◄───────┤                          │
          └──────────────────────────┘
                      │ YES              S820
                      ▼
          ┌──────────────────────────┐
          │ DECODE TRANSFORM COEFFICIENT │
          └──────────────────────────┘
                      │
                      ▼
                                       S830
          ┌──────────────────────────┐
    NO    │       NSST INDEX          │
  ◄───────┤   CODING APPLIED?         │
          └──────────────────────────┘
                      │ YES              S840
                      ▼
          ┌──────────────────────────┐
          │     PARSE NSST INDEX       │
          └──────────────────────────┘
                      │
                      ▼
```

FIG. 9

$$t_m = x_m \cos\theta - x_n \sin\theta$$

$$t_n = x_m \sin\theta + x_n \cos\theta$$

FIG. 10

FIG. 11

(a) forward RT

(b) inverse RT

FIG. 12

FIG. 13

EP 4 369 715 A1

RESIDUAL
SAMPLES
(A)

PRIMARY
TRANSFORM UNIT
(1311)

TRANSFORM COEFFICIENTS
(B)

SECONDARY
TRANSFORM UNIT
(1312)

TRANSFORM
COEFFICIENTS
(C)

TRANSFORM UNIT(1310)

TRANSFORM
COEFFICIENTS
(C')

(INVERSE) SECONDARY
TRANSFORM UNIT
(1321)

TRANSFORM COEFFICIENTS
(B')

(INVERSE) PRIMARY
TRANSFORM UNIT
(1322)

RESIDUAL
SAMPLES
(A')

INVERSE TRANSFORM UNIT(1320)

FIG. 14a

NON-SEPARABLE
SECONDARY
TRANSFORM

4x4

4x4

FIG. 14b

NON-SEPARABLE
SECONDARY
TRANSFORM

8x4

8x4

(a)

NON-SEPARABLE
SECONDARY
TRANSFORM

4x8

4x8

(b)

FIG. 14c

NON-SEPARABLE
SECONDARY
TRANSFORM

8x8

8x8

FIG. 14d

16x8 → NON-SEPARABLE SECONDARY TRANSFORM → 16x8

(a)

8x16 → NON-SEPARABLE SECONDARY TRANSFORM → 8x16

(b)

FIG. 15a

4x4 → NON-SEPARABLE PRIMARY TRANSFORM → 4x4

FIG. 15b

8x4 → NON-SEPARABLE PRIMARY TRANSFORM → 8x4

(a)

4x8 → NON-SEPARABLE PRIMARY TRANSFORM → 4x8

(b)

FIG. 15c

8x8 → NON-SEPARABLE PRIMARY TRANSFORM → 8x8

FIG. 15d

16x8　　NON-SEPARABLE PRIMARY TRANSFORM　　16x8

(a)

8x16　　NON-SEPARABLE PRIMARY TRANSFORM　　8x16

(b)

FIG. 16a

4x4　　NON-SEPARABLE PRIMARY TRANSFORM　　4x4

FIG. 16b

8x4 → NON-SEPARABLE PRIMARY TRANSFORM → 8x4

(a)

4x8 → NON-SEPARABLE PRIMARY TRANSFORM → 4x8

(b)

FIG. 16c

8x8 → NON-SEPARABLE PRIMARY TRANSFORM → 8x8

FIG. 16d

16x8 → NON-SEPARABLE PRIMARY TRANSFORM → 16x8

(a)

8x16 → NON-SEPARABLE PRIMARY TRANSFORM → 8x16

(b)

FIG. 17

START

S1710

GENERATE (PRIMARY) TRANSFORM
COEFFICIENTS BY APPLYING
NON-SEPARABLE PRIMARY
TRANSFORM TO RESIDUAL SAMPLES

S1720

SECONDARY
TRANSFORM APPLIED?

NO

YES          S1730

GENERATE (SECONDARY) TRANSFORM
COEFFICIENTS BY APPLYING
SECONDARY TRANSFORM TO
(PRIMARY) TRANSFORM COEFFICIENTS

END

FIG. 18

```
                    ┌─────────┐
                    │  START  │
                    └────┬────┘
                         │
                         ▼
                  ╱───────────────╲          S1810
                 ╱    SECONDARY     ╲              NO
                ⟨  INVERSE TRANSFORM  ⟩──────────────┐
                 ╲     APPLIED?      ╱               │
                  ╲───────┬─────────╱                │
                          │ YES         S1820        │
                          ▼                          │
        ┌─────────────────────────────────┐         │
        │   GENERATE (PRIMARY) TRANSFORM   │         │
        │     COEFFICIENTS BY APPLYING     │         │
        │    SECONDARY INVERSE TRANSFORM   │         │
        │     TO TRANSFORM COEFFICIENTS    │         │
        └────────────────┬────────────────┘         │
                         │◄──────────────────────────┘
                         ▼
        ┌─────────────────────────────────┐
        │    GENERATE RESIDUAL SAMPLES BY  │
        │   APPLYING NON-SEPARABLE PRIMARY │──── S1830
        │   INVERSE TRANSFORM TO (PRIMARY) │
        │       TRANSFORM COEFFICIENTS     │
        └────────────────┬────────────────┘
                         ▼
                    ┌─────────┐
                    │   END   │
                    └─────────┘
```

FIG. 19

```
                    ┌─────────┐
                    │  START  │
                    └────┬────┘
                         │
                         ▼
                  ╱───────────────╲          S1910
                 ╱    SUBBLOCK      ╲              NO
                ⟨ TRANSFORM/INVERSE  ⟩──────────────┐
                 ╲ TRANSFORM CONDITION╱             │
                  ╲   SATISFIED?     ╱              │
                   ╲──────┬─────────╱               │
                          │ YES         S1920       │
                          ▼                         │
        ┌─────────────────────────────────┐        │
        │   OBTAIN PLURALITY OF SUBBLOCKS  │        │
        │     BY SPLITTING INPUT BLOCK     │        │
        └────────────────┬────────────────┘        │
                         │◄─────────────────────────┘
                         ▼
        ┌─────────────────────────────────┐
        │   APPLY NON-SEPARABLE PRIMARY    │
        │ TRANSFORM/INVERSE TRANSFORM TO   │──── S1930
        │   INPUT BLOCK OR EACH SUBBLOCK   │
        └────────────────┬────────────────┘
                         ▼
                    ┌─────────┐
                    │   END   │
                    └─────────┘
```

FIG. 20a

NON-SEPARABLE PRIMARY TRANSFORM ON EACH SUBBLOCK

8x4

8x4

(a)

NON-SEPARABLE PRIMARY TRANSFORM ON EACH SUBBLOCK

4x8

4x8

(b)

FIG. 20b

(a)

(b)

FIG. 21

0:Planar
1:DC

FIG. 22a

| 1 | 2 | 3 | 4 |
|----|----|----|----|
| 5 | 6 | 7 | 8 |
| 9 | 10 | 11 | 12 |
| 13 | 14 | 15 | 16 |

FIG. 22b

| 1 | 5 | 9 | 13 |
|----|----|----|----|
| 2 | 6 | 10 | 14 |
| 3 | 7 | 11 | 15 |
| 4 | 8 | 12 | 16 |

FIG. 23

#P MODE           #(68-P) MODE

FIG. 24

#2 MODE         #66 MODE

FIG. 25

START

S2510

PERFORM CORE TRANSFORM BASED ON
PREDETERMINED NON-SEPARABLE
PRIMARY TRANSFORM MATRIX

S2520

ENCODE CURRENT BLOCK BASED ON
TRANSFORM COEFFICIENT BLOCK

END

FIG. 26

FIG. 27

## INTERNATIONAL SEARCH REPORT

| | International application No. |
|---|---|
| | **PCT/KR2022/009768** |

| A. | CLASSIFICATION OF SUBJECT MATTER |
|---|---|

**H04N 19/61**(2014.01)i; **H04N 19/18**(2014.01)i; **H04N 19/176**(2014.01)i; **H04N 19/122**(2014.01)i; **H04N 19/132**(2014.01)i; **H04N 19/124**(2014.01)i; **H04N 19/11**(2014.01)i; **H04N 19/593**(2014.01)i

According to International Patent Classification (IPC) or to both national classification and IPC

| B. | FIELDS SEARCHED |
|---|---|

Minimum documentation searched (classification system followed by classification symbols)

H04N 19/61(2014.01); H04N 19/105(2014.01); H04N 19/119(2014.01); H04N 19/12(2014.01); H04N 19/159(2014.01); H04N 19/18(2014.01); H04N 19/44(2014.01); H04N 19/60(2014.01); H04N 19/625(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 1차(primary), 변환(transform), 계수(coefficient), 잔차(residual), 복원(reconstruct), 크기(size)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021-0160519 A1 (TENCENT AMERICA LLC) 27 May 2021 (2021-05-27)<br>See paragraphs [0101]-[0102], [0116]-[0118], [0121], [0125], [0130] and [0132]; and figures 8 and 13. | 1-2,5,8-11,13,15 |
| Y | | 3-4,6-7,12,14 |
| Y | KR 10-2021-0055087 A (LG ELECTRONICS INC.) 14 May 2021 (2021-05-14)<br>See paragraphs [0356] and [0385]. | 3-4,12 |
| Y | KR 10-2020-0093468 A (XRIS CORPORATION) 05 August 2020 (2020-08-05)<br>See paragraphs [0411] and [0415]-[0416]. | 6-7,14 |
| A | KR 10-2018-0063187 A (QUALCOMM INCORPORATED) 11 June 2018 (2018-06-11)<br>See claims 25-38. | 1-15 |

| ✓ Further documents are listed in the continuation of Box C. | ✓ See patent family annex. |
|---|---|

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **06 October 2022** | **06 October 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2022/009768**

### C. DOCUMENTS CONSIDERED TO BE RELEVANT

| Category* | Citation of document, with indication, where appropriate, of the relevant passages | Relevant to claim No. |
|---|---|---|
| A | KR 10-2021-0000689 A (ELECTRONICS AND TELECOMMUNICATIONS RESEARCH INSTITUTE et al.) 05 January 2021 (2021-01-05) <br> See paragraphs [0512]-[0516]; and figure 26. | 1-15 |

Form PCT/ISA/210 (second sheet) (July 2022)

| INTERNATIONAL SEARCH REPORT | International application No. |
| Information on patent family members | PCT/KR2022/009768 |

| Patent document cited in search report | | | Publication date (day/month/year) | Patent family member(s) | | | Publication date (day/month/year) |
|---|---|---|---|---|---|---|---|
| US | 2021-0160519 | A1 | 27 May 2021 | CN | 113853745 | A | 28 December 2021 |
| | | | | EP | 4066385 | A1 | 05 October 2022 |
| | | | | JP | 2022-526400 | A | 24 May 2022 |
| | | | | KR | 10-2021-0135320 | A | 12 November 2021 |
| | | | | US | 11375220 | B2 | 28 June 2022 |
| | | | | US | 2022-0295086 | A1 | 15 September 2022 |
| | | | | WO | 2021-108027 | A1 | 03 June 2021 |
| KR | 10-2021-0055087 | A | 14 May 2021 | CN | 113039803 | A | 25 June 2021 |
| | | | | EP | 3852374 | A1 | 21 July 2021 |
| | | | | JP | 2022-500965 | A | 04 January 2022 |
| | | | | US | 11336920 | B2 | 17 May 2022 |
| | | | | US | 2021-0211729 | A1 | 08 July 2021 |
| | | | | US | 2022-0109879 | A1 | 07 April 2022 |
| | | | | WO | 2020-060364 | A1 | 26 March 2020 |
| KR | 10-2020-0093468 | A | 05 August 2020 | CN | 112514384 | A | 16 March 2021 |
| | | | | US | 2021-0360240 | A1 | 18 November 2021 |
| | | | | WO | 2020-159198 | A1 | 06 August 2020 |
| KR | 10-2018-0063187 | A | 11 June 2018 | CN | 108141597 | A | 08 June 2018 |
| | | | | CN | 108141597 | B | 08 March 2022 |
| | | | | EP | 3357243 | A1 | 08 August 2018 |
| | | | | JP | 2018-530247 | A | 11 October 2018 |
| | | | | JP | 6995744 | B2 | 17 January 2022 |
| | | | | KR | 10-2018-0063186 | A | 11 June 2018 |
| | | | | US | 10873762 | B2 | 22 December 2020 |
| | | | | US | 2020-0092583 | A1 | 19 March 2020 |
| | | | | WO | 2017-058614 | A1 | 06 April 2017 |
| | | | | WO | 2017-058615 | A1 | 06 April 2017 |
| KR | 10-2021-0000689 | A | 05 January 2021 | CN | 113906754 | A | 07 January 2022 |
| | | | | WO | 2020-262992 | A1 | 30 December 2020 |

Form PCT/ISA/210 (patent family annex) (July 2022)